# FASCICULE DE BREVET EUROPEEN

(11) **EP 3 625 846 B1**
(45) Date de publication et mention de la délivrance du brevet: **17.02.2021**
(21) Numéro de dépôt: 18727697.7
(22) Date de dépôt: 09.05.2018
(51) Int. Cl.: H01M 8/248, C25B 1/04, C25B 1/12, C25B 9/20, H01M 8/028, H01M 8/04746, H01M 8/124

(54) **RÉACTEUR D'ÉLECTROLYSE OU DE CO-ÉLECTROLYSE DE L'EAU (SOEC) OU PILE A COMBUSTIBLE (SOFC) À FONCTIONNEMENT SOUS PRESSION COMPRENANT UN SYSTÈME DE SERRAGE ADAPTÉ À UN TEL FONCTIONNEMENT**
WASSER-ELEKTROLYSEREAKTOR ODER -KOELEKTROLYSEREAKTOR (SOEC) ODER BRENNSTOFFZELLE (SOFC) BETRIEBEN BEI HOHEM DRUCK BEINHALTEND EINE EINSPANNVORRICHTUNG GEEIGNET FÜR DIESEN BETRIEB
WATER ELECTROLYSIS OR CO-ELECTROLYSIS REACTOR (SOEC) OR FUEL CELL (SOFC) OPERATING AT HIGH PRESSURE COMPRISING A TIGHTENING SYSTEM ADAPTED TO SUCH OPERATION

(30) Priorité: 15.05.2017 FR 1754260
(43) Date de publication de la demande: 25.03.2020
(73) Titulaire: Commissariat à l'Énergie Atomique et aux Énergies Alternatives, 75015 Paris (FR)
(72) Inventeur: REYTIER, Magali, 38250 Villard de Lans (FR); BERNARD, Charlotte, 74130 Contamine sur Arve (FR); ROUX, Guilhem, 38120 Saint-Egreve (FR); SZYNAL, Philippe, 73800 Chignin (FR)
(74) Mandataire: Nony
(86) Numéro de dépôt international: PCT/EP2018/062151
(87) Numéro de publication internationale: WO 2018/210683

(56) Documents cités:
- WO-A1-96/36086
- WO-A1-2016/096752
- WO-A2-02/27836
- WO-A2-2004/077587

## Description

### Domaine technique

La présente invention concerne le domaine des piles à combustibles à oxydes solides (SOFC, acronyme anglais pour « Solid Oxide Fuel Cell »), celui de l'électrolyse de l'eau à haute température (EHT, ou EVHT pour électrolyse de la vapeur d'eau à haute température, ou HTE acronyme anglais pour High Temperature Electrolysis, ou encore HTSE acronyme anglais pour High Temperature Steam Electrolysis) également à oxydes solides (SOEC, acronyme anglais pour « Solid Oxide Electrolyser Cell »), et celui de la co-électrolyse à haute température de l'eau et d'un autre gaz choisi parmi le dioxyde de carbone CO₂ ou le dioxyde d'azote NO₂.

L'invention a trait plus particulièrement à la réalisation d'un réacteur d'électrolyse ou de co-électrolyse de l'eau à haute température (EHT) de type SOEC, ou d'une pile à combustible de type SOFC, à empilement de cellules électrochimiques élémentaires dont le serrage est maintenu quelle que soit la température et qui fonctionne sous pression sans la nécessité d'une enceinte étanche et pressurisée.

Bien que décrite en référence principalement à l'application d'électrolyse de l'eau à haute température, l'invention s'applique tout aussi bien à une co-électrolyse d'eau et d'un autre gaz choisi parmi le dioxyde de carbone CO₂ ou le dioxyde d'azote NO₂, qu'à une pile à combustible SOFC.

L'invention s'applique à une pile à combustible SOFC utilisant comme combustible soit de l'hydrogène, soit un hydrocarbure, par exemple le méthane CH₄.

### Art antérieur

L'électrolyse de l'eau comprend une réaction électrolytique qui décompose l'eau en dioxygène et dihydrogène gazeux avec l'aide d'un courant électrique selon la réaction:

H₂O→H₂ + 1/2O₂.

Pour réaliser l'électrolyse de l'eau, il est avantageux de la réaliser à haute température typiquement entre 600 et 950°C, car une partie de l'énergie nécessaire à la réaction peut être apportée par de la chaleur qui est moins chère que l'électricité et l'activation de la réaction est plus efficace à haute température et ne nécessite pas de catalyseur noble. Pour mettre en œuvre l'électrolyse à haute température, il est connu d'utiliser un électrolyseur de type SOEC (acronyme anglais de « *Solid Oxyde Electrolyser Cell* »), constitué d'un empilement de motifs élémentaires comportant chacun une cellule d'électrolyse à oxyde solide, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau H₂O dans le compartiment cathodique. Sous l'effet du courant appliqué à la cellule, la dissociation des molécules d'eau sous forme vapeur est réalisée à l'interface entre l'électrode à hydrogène (cathode) et l'électrolyte: cette dissociation produit du gaz dihydrogène H₂ et des ions oxygène. Le dihydrogène est collecté et évacué en sortie de compartiment à hydrogène. Les ions oxygène O²⁻ migrent à travers l'électrolyte et se recombinent en dioxygène à l'interface entre l'électrolyte et l'électrode à oxygène (anode).

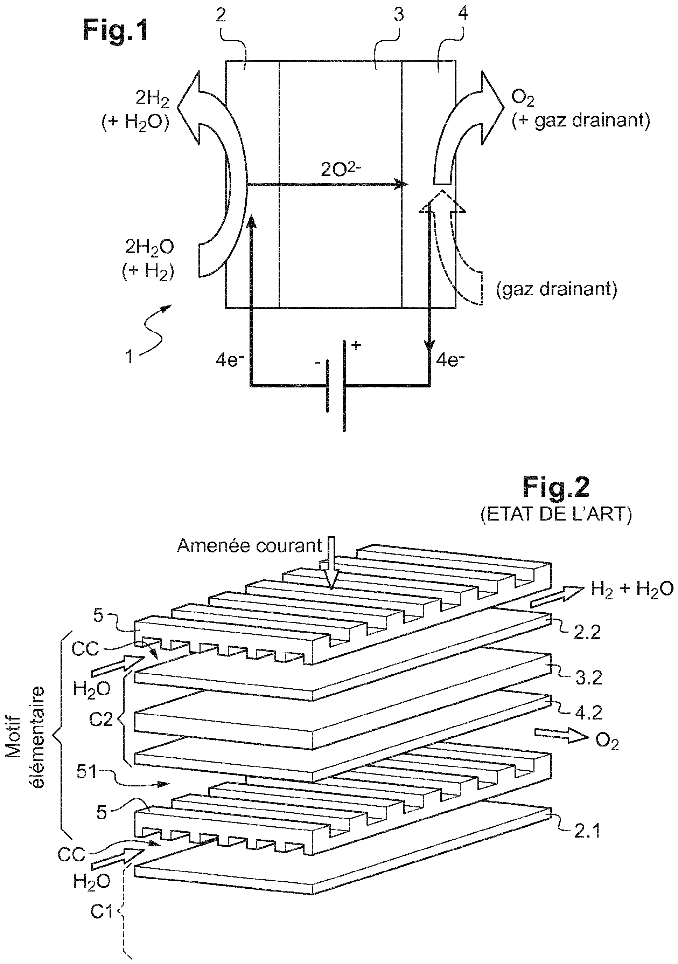

Comme schématisée en figure 1, chaque cellule d'électrolyse élémentaire 1 est formée d'une cathode 2 et d'une anode 4, placées de part et d'autre d'un électrolyte solide 3 généralement sous forme de membrane. Les deux électrodes (cathode et anode) 2,4 sont des conducteurs électriques, en matériau poreux, et l'électrolyte 3 est étanche au gaz, isolant électronique et conducteur ionique. L'électrolyte peut être en particulier un conducteur anionique, plus précisément un conducteur anionique des ions O²⁻ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂+ 4 e⁻.

L'électrolyte 3 intercalé entre les deux électrodes 2, 4 est le lieu de migration des ions O^{2-,} sous l'effet du champ électrique créé par la différence de potentiel imposée entre l'anode 4 et la cathode 2.

Comme illustré entre parenthèses en figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique et de faciliter la régulation de pression de la chambre anodique.

Un réacteur d'électrolyse élémentaire est constitué d'une cellule élémentaire telle que décrite ci-dessus, avec une cathode 2, un électrolyte 3, et une anode 4 et de deux connecteurs mono-polaires qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et les alimentations en gaz de l'électrolyseur (réacteur d'électrolyse).

Un électrolyseur de l'eau à haute température (EHT) comprend ainsi au moins une, généralement une pluralité de cellules d'électrolyse empilées les uns sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, un compartiment dit cathodique a pour fonction la distribution du courant électrique et de la vapeur d'eau ainsi que la récupération de l'hydrogène à la cathode en contact.

Un compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur de vapeur d'eau à haute température selon l'état de l'art. Cet électrolyseur EHT comporte une pluralité de cellules d'électrolyse élémentaires C1, C2... de type à oxydes solides (SOEC) empilées alternativement avec des interconnecteurs 5. Chaque cellule C1, C2... est constituée d'une cathode 2.1, 2.2,... et d'une anode 4.1, 4.2, entre lesquelles est disposé un électrolyte 3.1, 3.2.... L'ensemble des cellules d'électrolyse est alimenté en série par le courant électrique et en parallèle par les gaz.

L'interconnecteur 5 est un composant en alliage métallique qui assure la séparation entre les compartiments cathodique CC et anodique CA, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique CC. Le collectage de l'hydrogène produit et de la vapeur d'eau résiduelle à la cathode 2.1, 2.2 ... est effectué dans le compartiment cathodique CC en aval de la cellule C1, C2... après dissociation de la vapeur d'eau par celle-ci. Le collectage de l'oxygène produit à l'anode 4.2 est effectué dans le compartiment anodique CA en aval de la cellule C1, C2... après dissociation de la vapeur d'eau en ions oxygène par celle-ci.

L'interconnecteur 5 assure le passage du courant entre les cellules C1 et C2 par contact avec les électrodes adjacentes, c'est-à-dire entre l'anode 4.2 et la cathode 2.1.

Dans une pile à combustible à oxydes solides SOFC selon l'état de l'art, les cellules C1, C2... et interconnecteurs 5 utilisés sont les mêmes composants, mais le fonctionnement est inverse de celui d'un électrolyseur EHT tel qui vient d'être expliqué avec un sens du courant inversé, avec de l'air qui alimente les compartiments alors devenus cathodiques et de l'hydrogène en tant que combustible qui alimente les compartiments devenus à leur tour anodiques.

Un fonctionnement satisfaisant d'un électrolyseur EHT nécessite entre autres les fonctions essentielles suivantes:
A/ une bonne isolation électrique entre deux interconnecteurs adjacents dans l'empilement, sous peine de court-circuiter la cellule d'électrolyse élémentaire intercalée entre les deux interconnecteurs. Cette isolation électrique dépend des matériaux utilisés pour les différents composants en regard mais aussi du niveau de serrage de l'empilement ;
B/ une bonne étanchéité entre les deux compartiments distincts, i.e. anodique et cathodique, sous peine de recombinaison des gaz produits entraînant une baisse de rendement et surtout l'apparition de points chauds endommageant l'électrolyseur ; cela correspond à rechercher une tension initiale complète (acronyme anglais « OCV » pour Open Cell Voltage). Cette étanchéité dépend du design des joints et des matériaux utilisés pour les différents composants en regard mais aussi de la pression de gaz sollicitant le joint et du niveau de serrage de l'empilement.
C/ une bonne distribution des gaz à la fois en entrée et en récupération des gaz produits, sous peine de perte de rendement, d'inhomogénéité de pression et de température au sein des différentes cellules élémentaires voire de dégradations rédhibitoires des cellules cela correspond à rechercher la plus faible résistance de polarisation.

Les hautes températures compliquent considérablement la réalisation des trois fonctions essentielles A/ à C/ précitées. En outre, la fragilité des cellules à oxydes solides impose certaines règles de conception contraignantes de manière à garantir leur intégrité mécanique.

Différentes conceptions existent déjà pour réaliser simultanément les trois fonctions essentielles A/ à C/, mais il subsiste différentes difficultés à surmonter.

En particulier, en ce qui concerne la réalisation de la fonction B/, compte tenu des gammes de température de fonctionnement des électrolyseurs EHT et piles à combustibles SOFC élevées, typiquement 600°C à 1000°C, les joints d'étanchéités sont classiquement réalisés à base de verre ou de vitrocéramique. Un joint verre est à l'état pâteux à la température de fonctionnement.

Lors de la conception, il est nécessaire de veiller à ne pas chasser le verre sous l'effet d'un écart de pression appliquée sur le joint. Un joint en vitrocéramique subit quant à lui un cycle thermique in situ visant à le faire cristalliser et donc à le rendre solide à la température de fonctionnement. Tout comme pour le joint en verre, il faut veiller à ne pas chasser la vitrocéramique avant qu'elle ne soit solide.

La configuration la plus simple consiste à placer le joint entre deux plans denses, par opposition aux différents matériaux poreux présents dans un réacteur SOEC ou une pile à combustible SOFC : la tension de surface permet d'éviter son écoulement jusqu'à un certain différentiel de pression de part et d'autre du joint.

Pour favoriser cette tenue, il est nécessaire de réduire au mieux la hauteur du joint, d'augmenter la surface des zones en contact avec le verre et de réduire le différentiel de pression subi par le joint.

La réalisation de ce type d'étanchéités à base de verre au sein des réacteurs SOEC ou piles SOFC se heurte à plusieurs problèmes. Tout d'abord, les électrodes de part et d'autre de la cellule sont poreuses et elles ne peuvent donc pas simplement supporter de joint à base de verre. De plus, une isolation électrique entre interconnecteurs adjacentes doit être garantie, ce qu'un film de verre trop mince ne peut assurer sans risque. Enfin, ces verres doivent être écrasés pour réduire leur hauteur, mais aussi pour garantir le contact électrique entre cellule et interconnecteurs. Ce serrage doit se faire en évitant tout porte-à-faux de la cellule pour préserver son intégrité mécanique.

Cela étant, comme déjà évoqué, les joints à base de verre ou de vitrocéramique présentent intrinsèquement l'inconvénient majeur de ne résister qu'à de faibles différences de pression, de l'ordre de quelques centaines de millibars.

Le fonctionnement interne d'une pile SOFC ou d'un réacteur EHT sous pression, typiquement de quelques bars à quelques dizaines de bars, typiquement 30 bars, requiert alors une solution pour éviter la perte des étanchéités par les joints.

Il est déjà connu une solution qui consiste à placer le réacteur à empilement EHT ou pile SOFC au sein d'une enceinte étanche elle-même pressurisée. On peut citer ici les demandes de brevets ou brevets FR 2957361A1, US2002/0081471 et US 6689499 B2 qui divulguent ce type de solution. Cette solution connue offre l'avantage de pouvoir imposer la même pression entre l'intérieur et l'extérieur de l'empilement. Cela permet donc un fonctionnement à une pression élevée, de quelques bars à quelques dizaines de bars, sans sollicitation mécanique des joints en verre ou en vitrocéramique.

Mais, cela impose de garantir la tenue mécanique d'une enceinte pressurisée à ces pressions, typiquement 30 bars, et qui contient un empilement sous une température élevée, typiquement à 800°C avec circulation en son sein d'hydrogène H₂ et d'oxygène O₂. La gestion de la sécurité de cette enceinte à pression peut ne pas être triviale.

De plus, la présence de l'enceinte complique le maintien du serrage de l'empilement qui permet de garantir un bon contact électrique entre interconnecteurs et cellules. En particulier, le déport des organes de serrage dans une zone relativement froide n'est pas aisé.

Enfin, l'enceinte pressurisée doit être réalisée avec des passages à la fois traversants et étanches afin de réaliser l'alimentation/récupération en gaz et en courant électrique depuis l'extérieur de l'enceinte. Ainsi, ces passages doivent être isolants électriques pour certains d'entre eux et être à température contrôlée pour ceux contenant de la vapeur d'eau de manière à éviter toutes bouffées de vapeur d'eau. En effet, si on ne contrôle pas la température dans les tuyaux d'entrée et ou de sortie, la vapeur d'eau circulant en continu à l'intérieur peut rencontrer une zone froide, et alors se condenser de manière non contrôlée. Cela provoque des bouffées qui génèrent des variations d'alimentation en gaz et en pression.

Toutes ces mesures de précaution conduisent à une installation complète intégrant l'enceinte étanche pressurisée et le réacteur EHT ou la pile SOFC, qui est compliquée et coûteuse.

Afin de s'affranchir de la solution de mise en œuvre d'une enceinte étanche pressurisée à l'intérieur de laquelle un réacteur EHT ou la pile SOEFC est logé(e), la déposante a proposé dans la demande de brevet WO2016/096752A1, un module comprenant un circuit de circulation d'un gaz supplémentaire aux gaz réactifs nécessaires à la réaction d'électrolyse ou à la réaction inverse dans une pile SOFC, le circuit étant adapté pour que, lors du fonctionnement en pression, ce gaz supplémentaire vienne équilibrer le différentiel de pression des gaz de part et d'autre des joints d'étancheité à base de verre et/ou vitrocéramique.

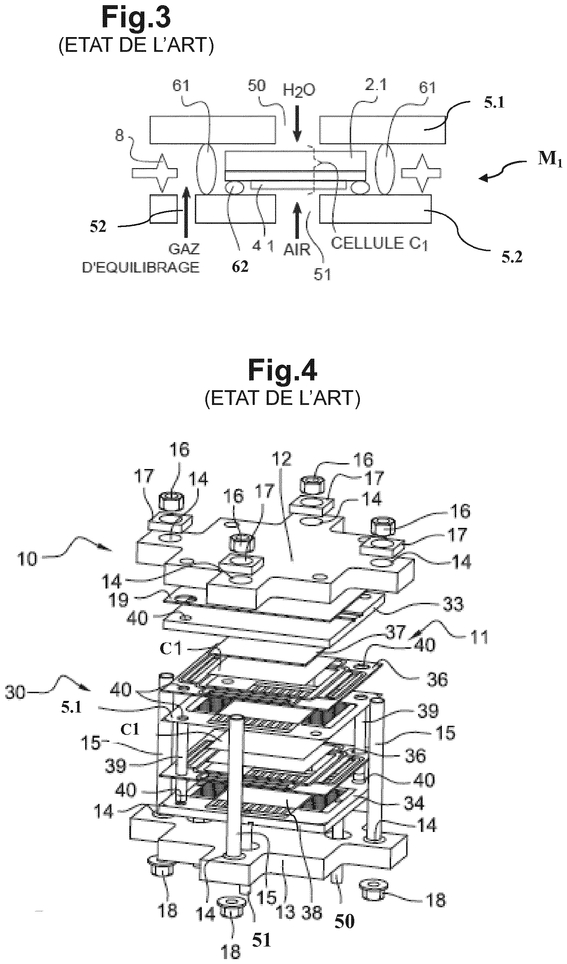

On a reproduit en figure 3, une vue de coupe schématique d'un module destiné à former le motif élémentaire d'un électrolyseur de vapeur d'eau EHT conforme à la demande WO2016/096752A1.

Ce module M1 comporte une cellule (C1) électrochimique élémentaire de forme axisymétrique autour d'un axe central X, la cellule étant formée d'une cathode, d'une anode, et d'un électrolyte intercalé entre la cathode et l'anode, deux interconnecteurs électrique et fluidique 5.1, 5.2 de part et d'autre de la cellule.

Les deux interconnecteurs 5.1, 5.2 sont réalisés chacun en une seule pièce métallique, de préférence en acier ferritique à environ 20% de chrome, de préférence en CROFER® 22APU ou le F18TNb, ou à base Nickel de type Inconel® 600 ou Haynes 230®.

L'interconnecteur supérieur 5.1 est percé d'un conduit 50 d'amenée de la vapeur d'eau, débouchant selon l'axe central sur la cellule du côté de la cathode. La vapeur d'eau amenée et l'hydrogène produit sont distribués radialement jusqu'à un conduit de récupération de l'hydrogène produit, débouchant à la périphérie de la cellule du côté de la cathode.

L'interconnecteur inférieur 5.2 est percé d'un conduit 51 d'amenée de gaz drainant, tel que l'air, débouchant selon l'axe central sur la cellule du côté de l'anode. Il est également prévu une distribution radiale de l'air amené et de l'oxygène produit jusqu'à un conduit de récupération de l'oxygène produit, débouchant à la périphérie de la cellule du côté de l'anode.

Un premier joint d'étanchéité 61 de forme axisymétrique autour de l'axe central X, est agencé à la périphérie de la cellule élémentaire C1 et en appui à la fois contre chacun des deux interconnecteurs. Ce joint est prévu pour réaliser l'étanchéité autour du compartiment cathodique (H₂O/H₂).

Un deuxième joint d'étanchéité 62 de forme axisymétrique autour de l'axe central, est agencé à la périphérie de l'anode de la cellule élémentaire et en appui à la fois contre l'interconnecteur inférieur et contre l'électrolyte. Ce joint est prévu pour réaliser l'étanchéité autour du compartiment anodique (air/O₂). Les joints d'étanchéité 61 et 62 sont à base de verre et/ou de vitrocéramique.

Un dispositif d'isolation électrique et d'étanchéité 8 de forme axisymétrique autour de l'axe central X est agencé à la périphérie du premier joint d'étanchéité autour du compartiment cathodique. Le dispositif 8 peut être constitué d'une seule rondelle isolante électriquement formant une cale d'étanchéité munie de deux joints métalliques, en appui respectivement contre l'interconnecteur supérieur 5.1 et inférieur 5.2.

L'interconnecteur inférieur 5.2 est percé d'au moins un conduit d'amenée 58 du gaz d'équilibrage, et d'au moins un conduit de récupération de ce gaz d'équilibrage débouchant sur l'espace délimité entre le joint 61 et le dispositif 8 de sorte à réaliser une distribution homogène du gaz d'équilibrage afin d'équilibrer les pressions de part et d'autre du premier joint d'étanchéité 61 lors du fonctionnement.

Le dispositif 8 est adapté pour résister à un différentiel de pressions important entre la pression du gaz d'équilibrage, que l'on amène à la valeur la plus proche possible de la pression de fonctionnement du réacteur EHT, typiquement de 10 à 30 bars et la pression extérieure au module, typiquement 1 bar. Le dispositif d'isolation et d'étanchéité 8 permet d'éviter tout court-circuit entre l'interconnecteur inférieur 5.2 et l'interconnecteur supérieur 5.1.

Par ailleurs, comme déjà évoqué, le déport en zone froide des organes de serrage de l'empilement d'un réacteur SOEC ou d'une pile à combustible a plusieurs inconvénients majeurs.

Afin de pallier ces inconvénients, la déposante a proposé une solution de serrage sans déport en zone froide, qui est décrite et revendiquée dans la demande de brevet déposée le 15 décembre 2015 sous le numéro FR 1562384 et intitulée « *Système de serrage autonome d'un empilement à oxydes solides de type SOEC*/*SOFC à haute température ».*

On a reproduit en figure 4, une vue éclatée en perspective et partielle, d'un exemple d'ensemble 30 comportant un empilement 11 à oxydes solides de type SOEC/SOFC à haute température et un système de serrage 10 autonome de cet empilement 11 conforme à la demande FR1562384 précitée.

Le système de serrage 10 comporte tout d'abord une plaque de serrage supérieure 12 et une plaque de serrage inférieure 13, entre lesquelles un empilement 11 à oxydes solides de type SOEC/SOFC est enserré. L'empilement 11 à oxydes solides de type SOEC/SOFC comporte une pluralité de cellules électrochimiques C1 formées chacune d'une cathode, d'une anode et d'un électrolyte intercalé entre la cathode et l'anode, et une pluralité d'interconnecteurs intermédiaires 5 agencés chacun entre deux cellules électrochimiques C1 adjacentes.

Chaque plaque de serrage, supérieure 12 et inférieure 13, comporte une pluralité d'orifices de serrage 14.

De plus, le système de serrage 10 comporte des boulons filetés, au nombre de quatre dans l'exemple illustré. Chaque boulon comporte une tige de serrage 15 filetées, s'étendant au travers d'un orifice de serrage 14 de la plaque de serrage supérieure 12 et au travers d'un orifice de serrage 14 correspondant de la plaque de serrage inférieure 13 pour permettre l'assemblage entre elles des plaques de serrage supérieure 12 et inférieure 13.

Un premier écrou de serrage 16 associé à une rondelle de serrage 17 coopère avec chaque tige de serrage 15 correspondante insérée au travers d'un des orifices de serrage 14 de la plaque de serrage supérieure 12.

Un deuxième écrou de serrage 18 coopère avec chaque tige de serrage 15 correspondante, insérée au travers de l'orifice de serrage 14 de la plaque de serrage inférieure 13.

Les composants des boulons de serrage (tiges 15 et écrous 16, 18) sont avantageusement réalisés en superalliage à base de nickel de type Inconel 625. Ce matériau permet de garantir un comportement élastique et donc d'éviter tout fluage ou relaxation malgré les niveaux de température envisagés.

Les rondelles de serrage 17 sont quant à elles réalisées en acier austénitique réfractaire de type AISI 310. L'épaisseur des rondelles de serrage 17 peut être ajustée en fonction du nombre de cellules électrochimiques C1 présentes dans l'empilement 11 à oxydes solides de type SOEC/SOFC.

Le système de serrage 10 ainsi défini permet de compenser l'écart de dilatation entre les tiges de serrage 15 en superalliage à base de nickel de type Inconel 625 et l'empilement 11 à oxydes solides de type SOEC/SOFC par la dilatation importante des plaques de serrage inférieure 12 et supérieure 13 et des rondelles de serrage 17 réalisées en acier austénitique réfractaire de type AISI 310.

Le système de serrage 10 comporte en outre une plaque d'isolation électrique 19, de préférence en mica, entre l'empilement 11 à oxydes solides de type SOEC/SOFC et la plaque de serrage supérieure 12.

Cette plaque 19 joue le rôle de cale d'isolation électrique entre l'empilement 11 à oxydes solides de type SOEC/SOFC et la plaque de serrage supérieure 12. En l'absence de celle-ci, le système de serrage 10 étant métallique, il provoquerait un court-circuit global entre le haut et le bas de l'empilement 11.

L'empilement 11 comporte en outre une plaque terminale supérieure 33 et une plaque terminale inférieure 34, entre lesquelles la pluralité de cellules électrochimiques C1 et la pluralité d'interconnecteurs 5 sont enserrées.

La plaque terminale supérieure 33 est au contact de la plaque d'isolation électrique 19 du système de serrage 10, tandis que la plaque terminale inférieure 34 est au contact de la plaque de serrage inférieure 13 du système de serrage 10.

Par ailleurs, chaque plaque terminale inférieure 34 est traversée par quatre tubes métalliques d'entrée 50, 51 et de sortie des gaz produits.

En outre, un cadre isolant électriquement 36, de préférence en mica, est agencé autour de chaque cellule électrochimique C1 et entre deux interconnecteurs 5 adjacents. Un tel cadre isolant 36 permet le centrage de chaque cellule électrochimique C1 et l'isolation électrique entre les interconnecteurs 5.

Chaque cadre isolant 36 peut également servir de support pour des joints d'étanchéité, notamment en verre et/ou vitrocéramique.

L'empilement 11 à oxydes solides de type SOEC/SOFC peut également comporter de plus une première couche de contact 37 entre chaque cathode en SOEC ou chaque anode en SOFC des cellules électrochimiques C1 et chaque interconnecteur intermédiaire 5 ou plaque terminale supérieure 33, et une deuxième couche de contact 38 entre chaque anode en SOEC ou chaque cathode en SOFC des cellules électrochimiques C1 et chaque interconnecteur 5 ou plaque terminale inférieure 34.

Ces couches de contact 37, 38 permettent d'améliorer le passage du courant électrique entre les interconnecteurs 5 et les cellules électrochimiques C1.

La première couche de contact 37 est de préférence une grille de nickel tandis que la deuxième couche de contact 38 est une couche céramique en oxyde de type manganite de lanthane strontium (ou encore LSM pour « Lanthanum Strontium Manganite» en anglais).

Enfin, il peut être prévu deux colonnes de guidage 39, s'étendant au travers d'orifices de guidage 40 formés dans la plaque terminale supérieure 33, la plaque terminale inférieure 34, les interconnecteurs 5, les cadres isolants 36 et la plaque de serrage supérieure 12. Ces colonnes de guidage 39 permettent le guidage en écrasement de l'empilement 11 à oxydes solides de type SOEC/SOFC par compression lors de son serrage.

De plus, l'ensemble des matériaux en acier mis en jeu au sein de l'empilement 11 sont des aciers ferritiques, notamment de type Crofer, AISI 441 et/ou AISI 430.

A titre indicatif, l'ordre de grandeur des coefficients de dilatation moyens α utilisés entre 20 et 800°C pour les divers matériaux mentionnés auparavant, à savoir :
- acier ferritique : α = 12.10⁻⁶,
- grille en nickel et Inconel 625 : α = 16.10⁻⁶,
- acier austénitique de type AISI 310 : α = 18.10⁻⁶, et
- manganite de lanthane strontium (LSM) : α = 12.10⁻⁶.

Selon les épaisseurs respectives de chacun des composants de l'empilement 11, l'épaisseur des rondelles de serrage 17 en acier AISI 310 est choisie de manière à garantir que l'ensemble des dilatations des pièces situées entre les écrous de serrage 16 et 18, correspondant à la somme du produit (α x épaisseur) pour chaque composant, est égal ou légèrement supérieur à la dilatation des tiges de serrage filetées 15. Cela garantit alors le maintien du serrage initial quelle que soit la variation de température, voire offre un léger sur-serrage en passant de 20 à 800°C. Ainsi, pour un résultat de test d'un ensemble 30 concluant en termes de contact électrique et d'étanchéité, les rondelles de serrage 17 en AISI 310 présentent une épaisseur d'environ 10 mm pour un nombre de 25 cellules électrochimiques C1.

Le système de serrage 10 qui vient d'être décrit n'est pas complètement satisfaisant dans toutes les configurations de fonctionnement sous pression d'un réacteur SOEC ou pile à combustible SOFC.

En effet, pour un fonctionnement sous pression, ce système de serrage va subir l'effet usuellement désigné par effet de fond, effet proportionnel à la pression.

En effet, lorsqu'on souhaite faire fonctionner l'empilement SOEC/SOFC sous pression du ou des gaz réactifs, il est nécessaire de réaliser une montée en pression dudit empilement. Cette montée en pression se traduit par une poussée/traction sur les extrémités des boulons de serrage.

Aussi, pour compenser cette poussée, il serait nécessaire de procéder à un resserrage progressif de la boulonnerie de manière à compresser cet effet de fond.

Or, par définition, le réacteur SOEC ou la pile à combustible SOFC fonctionnant à haute température, typiquement entre 600°C et 1000°C, ce resserrage in situ n'est pas envisageable.

Il existe donc un besoin de proposer une solution efficace de serrage d'un empilement d'un réacteur d'électrolyse de type SOEC ou d'une pile à combustible de type SOFC, destiné(e) à fonctionner sous pression des gaz réactifs, sans la mise en œuvre d'une enceinte étanche pressurisée, notamment afin de s'affranchir d'un resserrage progressif d'une boulonnerie de serrage, dû à l'effet de fond dû à la montée sous pression de l'empilement.

De manière générale, il existe un besoin de proposer une solution efficace de (re)serrage, malgré les hautes températures, d'un empilement d'un réacteur d'électrolyse de type SOEC ou d'une pile à combustible de type SOFC, que l'empilement fonctionne avec ou sans pression, c'est-à-dire à la pression atmosphérique.

Un but de l'invention est de répondre au moins en partie à ce(s) besoin(s).

### Exposé de l'invention

Pour ce faire, l'invention concerne, un dispositif électrochimique, constituant un réacteur d'électrolyse ou de co-électrolyse SOEC ou une pile à combustible SOFC, destiné à fonctionner à haute température, comprenant :
- un empilement de cellules électrochimiques à base d'oxydes solides de type SOEC/SOFC, chaque cellule étant formée d'une cathode, d'une anode, et d'un électrolyte intercalé entre la cathode et l'anode;
- deux plaques d'extrémité, dites plaques terminales, entre lesquelles l'empilement est agencé ;
- deux plaques de serrage de l'empilement, entre lesquelles les plaques d'extrémité et l'empilement sont agencés;
- des moyens de serrage entre les plaques de serrage, les moyens de serrage étant adaptés pour serrer et maintenir serré l'empilement entre les plaques terminales, quelle que soit la température entre la température ambiante et les hautes températures de fonctionnement du dispositif;
- une chambre de serrage délimitée entre l'une des plaques terminales et la plaque de serrage adjacente, la chambre de serrage étant reliée à un circuit de gaz de serrage en surpression par rapport à l'intérieur de l'empilement.

Le circuit de gaz de serrage peut être indépendant des circuits de gaz réactifs au sein de l'empilement : la chambre peut par conséquent être alimentée de manière indépendante de l'empilement par un gaz de serrage.

Ainsi, selon une première variante, le circuit de gaz de serrage ne traverse pas l'empilement.

Selon cette première variante, le circuit de gaz de serrage comprend avantageusement deux conduits débouchant, percés dans l'épaisseur de la plaque terminale délimitant la chambre de serrage. Le gaz de serrage alimente ainsi la chambre de serrage par l'un des conduits et il est évacué de cette dernière par l'autre des conduits.

Selon une deuxième variante, le circuit de gaz de serrage traverse l'empilement.

La chambre de serrage peut être avantageusement réalisée entre l'empilement et la plaque de serrage supérieure, évitant ainsi tous les passages de tubes de la partie inférieure de l'empilement.

Selon une première alternative de réacteur d'électrolyse ou de co-électrolyse de type SOEC, l'empilement est un empilement de motifs élémentaires, chaque motif élémentaire comprenant:
- une cellule électrochimique élémentaire à oxydes solides,
- un premier et un deuxième dispositif formant chacun un interconnecteur électrique et fluidique, constitué chacun d'un composant en matériau conducteur électronique et étanche aux gaz; les premier et deuxième interconnecteurs étant agencés de part et d'autre de la cellule élémentaire; le premier interconnecteur étant percé d'un conduit d'amenée de la vapeur d'eau, débouchant sur la cellule du côté de la cathode et, d'un conduit de récupération de l'hydrogène produit, débouchant à la périphérie de la cellule du côté de la cathode de sorte à réaliser une distribution homogène respectivement de la vapeur d'eau amenée et de l'hydrogène produit, depuis le conduit d'amenée jusqu'au conduit de récupération; le deuxième interconnecteur étant percé d'un conduit de récupération de l'oxygène produit, débouchant à la périphérie de la cellule du côté de l'anode de sorte à réaliser une distribution homogène de l'oxygène produit jusqu'au conduit de récupération;
- un premier joint d'étanchéité agencé à la périphérie de la cellule élémentaire et en appui à la fois contre le premier interconnecteur et contre le deuxième interconnecteur;
- un deuxième joint d'étanchéité agencé à la périphérie de l'anode de la cellule élémentaire et en appui à la fois contre le deuxième interconnecteur et contre l'électrolyte ; les premier et deuxième joints d'étanchéité étant à base de verre et/ou de vitrocéramique ;
- un dispositif d'isolation et d'étanchéité agencé à la périphérie du premier joint d'étanchéité et en appui respectivement contre le premier et contre le deuxième interconnecteur;
- au moins un conduit d'amenée et au moins un conduit de récupération du gaz de serrage, réalisés dans le premier et le deuxième interconnecteurs et débouchant chacun sur l'espace délimité entre le premier joint et le dispositif d'isolation et d'étanchéité, de sorte à réaliser une distribution homogène du gaz de serrage depuis son conduit d'amenée jusqu'à son conduit de récupération, le gaz de serrage constituant ainsi en outre un gaz d'équilibrage pour équilibrer les pressions de part et d'autre du premier joint d'étanchéité lors du fonctionnement en pression du réacteur ;
les conduits d'amenée et de récupération du circuit de gaz de serrage et d'équilibrage débouchant à l'intérieur de la chambre de serrage.

Selon une variante, le deuxième interconnecteur est percé d'un conduit d'amenée de gaz drainant, tel que l'air, sur la cellule du côté de l'anode de sorte à réaliser une distribution homogène respectivement du gaz drainant amené et de l'oxygène produit, depuis le conduit d'amenée jusqu'au conduit de récupération.

L'invention concerne également, selon une deuxième alternative, une pile à combustible de type SOFC, dans laquelle l'empilement est un empilement de motifs élémentaires, chaque motif élémentaire comprenant:
- une cellule électrochimique élémentaire à oxydes solides,
- un premier et un deuxième dispositif formant chacun un interconnecteur électrique et fluidique, constitué chacun d'un composant en matériau conducteur électronique et étanche aux gaz; les premier et deuxième interconnecteur étant agencés de part et d'autre de la cellule élémentaire; le premier interconnecteur étant percé d'un conduit d'amenée de combustible, débouchant sur la cellule du côté de l'anode SOFC et, d'un conduit de récupération de l'eau produite, à la périphérie de la cellule du côté de l'anode de sorte à réaliser une distribution homogène respectivement du combustible amené et de l'eau produite, depuis le conduit d'amenée jusqu'au conduit de récupération; le deuxième interconnecteur étant percé d'un conduit d'amenée d'air ou d'oxygène, débouchant sur la cellule du côté de la cathode SOFC et, d'un conduit de récupération du surplus d'air ou d'oxygène, débouchant à la périphérie de la cellule du côté de la cathode de sorte à réaliser une distribution homogène de l'air ou de l'oxygène, depuis le conduit d'amenée jusqu'au conduit de récupération;
- un premier joint d'étanchéité agencé à la périphérie de la cellule élémentaire et en appui à la fois contre le premier interconnecteur et contre le deuxième interconnecteur;
- un deuxième joint d'étanchéité agencé à la périphérie de la cathode SOFC de la cellule élémentaire et en appui à la fois contre le deuxième interconnecteur et contre l'électrolyte, les premier et deuxième joints d'étanchéité étant à base de verre et/ou de vitrocéramique ;
- un dispositif d'isolation et d'étanchéité agencé à la périphérie du premier joint d'étanchéité et en appui respectivement contre le premier et contre le deuxième interconnecteur;
- au moins un conduit d'amenée et au moins un conduit de récupération du gaz de serrage réalisés dans le premier et le deuxième interconnecteurs et débouchant chacun sur l'espace délimité entre le premier joint et le dispositif d'isolation et d'étanchéité, de sorte à réaliser une distribution homogène du gaz de serrage depuis son conduit d'amenée jusqu'à son conduit de récupération, le gaz de serrage constituant ainsi en outre un gaz d'équilibrage pour équilibrer les pressions de part et d'autre du premier joint d'étanchéité lors du fonctionnement en pression de la pile;
les conduits d'amenée et de récupération du circuit de gaz serrage et d'équilibrage débouchant à l'intérieur de la chambre de serrage.

Pour un fonctionnement sous pression, la forme générale de l'empilement, des plaques d'extrémité et de la chambre de serrage est de préférence axisymétrique. On peut aussi envisager une forme générale ovale.

La chambre de serrage peut être avantageusement délimitée au-dessus de l'empilement, entre la plaque terminale supérieure et la plaque de serrage supérieure, et plus précisément entre la plaque terminale supérieure et la plaque d'isolation électrique placée sous la plaque de serrage supérieure.

Selon un mode de réalisation avantageux, la chambre de serrage est délimitée par le dessus de la plaque terminale supérieure en tant que fond, par une plaque pleine en tant que couvercle et d'un anneau en tant que paroi latérale, le fond, le couvercle et la paroi latérale de la chambre étant assemblés entre eux par soudage. Le couvercle et la paroi latérale peuvent chacun être constitués d'une tôle mince, dont l'épaisseur est comprise avantageusement entre 0,1 et 0,5 mm, de préférence égale à 0,2mm.

Ainsi, l'invention consiste essentiellement à définir en sus de la boulonnerie de serrage, une chambre de serrage dans laquelle va circuler un autre gaz que les gaz réactifs, sensiblement à la même pression que ces derniers dans l'empilement. La pression du gaz qui circule dans la chambre de serrage, au-dessus de l'empilement de motifs élémentaires, vient alors équilibrer la pression due aux gaz réactifs et produits au sein de l'empilement.

Cette circulation du gaz sous pression au sein de la chambre de serrage vient alors compenser de manière passive l'effet de fond due à la poussée exercée par les gaz réactifs et produits sous pression au sein de l'empilement.

Cette chambre de serrage à compensation de pression permet de ne pas effectuer de resserrage de la boulonnerie de serrage lors de la montée en pression, un tel resserrage n'étant d'ailleurs pas possible in situ du fait des hautes températures de fonctionnement du réacteur SOEC ou de la pile à combustible SOFC, typiquement entre 600°C et 1000°C.

Le serrage initial de la boulonnerie de la boulonnerie de serrage, i.e. avant la montée en pression de l'empilement, peut ainsi être celui utilisé classiquement pour un empilement qui fonctionne sans pression, typiquement aux environs de 200 kg appliqués sur l'ensemble des tiges de serrage pour un empilement de 100 cm² de surface active de cellule électrochimique élémentaire.

En revanche, on veille à ce que le dimensionnement de la boulonnerie garantisse sa tenue mécanique sous l'effet de la pression au sein de la chambre de serrage, typiquement, de l'ordre de 2 tonnes pour un empilement fonctionnant à 10 bars.

La boulonnerie de serrage interdit ainsi l'ouverture intempestive de l'empilement, ce qui assure une sécurité de fonctionnement et permet le serrage par compression de chaque cellule entre interconnecteurs adjacents. Le serrage, garant de l'étanchéité et du contact électrique est par ailleurs réalisé en appliquant un effort de compression bien adapté d'un interconnecteur sur l'autre. Les chaines de côtes de tous les composants du réacteur ou de la pile sont déterminées pour garantir un écrasement des joints d'étanchéité en périphérie, ainsi que celui éventuel des couches de contact électrique. Typiquement, l'écrasement réalisé par serrage est de quelques dizaines de microns.

Les boulons sont aisés à mettre en œuvre et fiables pour garantir la sécurité recherchée, i.e. l'empêchement de l'ouverture de l'empilement en fonctionnement en cas de surpression.

En outre, selon un aspect supplémentaire de l'invention, le gaz circulant est un gaz de serrage qui peut servir en outre de gaz d'équilibrage, et qui permet de s'affranchir d'une solution connue de mise en œuvre d'une enceinte étanche pressurisée à l'intérieur de laquelle le réacteur EHT ou la pile SOEFC est logé(e). Le volume de gaz à comprimer est par ailleurs bien plus faible que dans le cas d'une enceinte, conduisant à un meilleur rendement énergétique et une sécurité en pression accrue.

Ainsi, on modifie uniquement le circuit de circulation du gaz d'équilibrage en extrémité supérieure de l'empilement qui vient faire une boucle à l'intérieur de la chambre de serrage conforme à l'invention.

On obtient ainsi une chambre de serrage simple à réaliser alimentée de manière directe par le gaz d'équilibrage qui circule sur la hauteur de l'empilement de bas en haut puis à la sortie de la chambre de serrage est comprimé à nouveau pour recirculer de haut en bas de l'empilement.

On assigne ainsi en quelque sorte une nouvelle fonction de serrage au gaz d'équilibrage qui conserve sa fonction première de gérer le différentiel de pressions entre l'intérieur ou l'extérieur d'un réacteur EHT ou d'une pile à combustible SOFC, et donc permettre un fonctionnement fiable sous pression.

Le gaz de serrage peut également permettre de brûler les fuites de gaz réactifs ou issus de la réaction. Il peut s'agir avantageusement d'air. Ce circuit permet alors aussi de détecter la présence de combustible en analysant un circuit de faible volume devant les besoins de ventilation de sécurité autour de l'installation. La détection de fuite de combustible, notamment d'hydrogène n'en sera que plus rapide et plus sûre.

Dans le mode de fonctionnement sous pression, la seule étanchéité qui doit résister au différentiel de pressions entre l'intérieur, typiquement comprises entre 10 et 30 bars, et l'extérieur, typiquement égale à 1 bar, tout en étant isolante électrique est celle réalisée par le dispositif d'étanchéité et d'isolation à l'extérieur de la circulation du gaz d'équilibrage, les contraintes subies par cette étanchéité étant supérieures à celles entre compartiments anodique et cathodique dans lesquelles circulent les gaz réactifs.

En mode de fonctionnement nominal d'un réacteur EHT ou d'une pile SOFC, le gaz d'équilibrage et de serrage choisi est de préférence de l'air, ce qui permet de brûler d'éventuelles petites fuites d'hydrogène (<quelques pourcent de la production des cellules) du premier joint d'étanchéité.

Ce gaz d'équilibrage choisi est l'hydrogène H₂ et/ou de la vapeur d'eau H₂O et/ou un combustible, lorsque l'étanchéité vis-à-vis de l'extérieur de l'empilement est conservée mais que l'étanchéité du premier joint est perdue.

Enfin, le gaz de serrage et d'équilibrage peut être un gaz neutre à fort débit de manière à maintenir la pression lorsqu'il y a une perte concomitante de l'étanchéité du premier joint et du dispositif vis-à-vis de l'extérieur.

En outre, le gaz d'équilibrage et de serrage peut avoir avantageusement un rôle de régulation thermique d'un réacteur EHT ou d'une pile à combustible SOFC. En particulier, lorsque le gaz de serrage est de l'air, il peut être avantageux d'utiliser la sortie de la chambre de serrage pour alimenter le compartiment anodique SOEC. Le passage dans le circuit de serrage permet un préchauffage.

Le gaz de serrage qui peut permettre le resserrage de l'empilement au cours de son fonctionnement sert également à ventiler en quelque sorte l'empilement en l'entourant d'un rideau du gaz de serrage qui peut brûler les fuites de gaz réactifs ou issus de la réaction ou encore rendre inerte l'environnement fluidique autour de l'empilement par de l'azote par exemple.

Chaque dispositif d'étanchéité est avantageusement constitué d'une rondelle isolante et de troisième et quatrième joints métalliques de part et d'autre de la rondelle isolante. Il peut aussi être constitué par une rondelle isolante brasée sur les interconnecteurs.

Les moyens de serrage peuvent comporter deux boulons de serrage agencés en traversant les plaques de serrage.

Selon un mode de réalisation avantageux, chaque boulon de serrage comprend:
- une tige de serrage filetée,
- un premier écrou de serrage associé à une première rondelle de serrage destinés à coopérer par vissage avec la tige de serrage filetée insérée au travers d'un orifice de serrage de la plaque de serrage supérieure, la première rondelle de serrage étant agencée entre le premier écrou de serrage et la plaque de serrage supérieure;
- un deuxième écrou de serrage associé à une deuxième rondelle de serrage destinés à coopérer par vissage avec la tige de serrage filetée insérée au travers d'un orifice de serrage de la plaque de serrage inférieure, la deuxième rondelle de serrage étant agencée entre le deuxième écrou de serrage et la plaque de serrage inférieure.

On peut prévoir en outre un tube isolant électrique agencé entre la tige de serrage et l'orifice de serrage de la plaque de serrage inférieure, la deuxième rondelle de serrage étant également isolante électrique.

L'invention a également pour objet un procédé de fonctionnement d'un réacteur SOEC selon la première alternative, selon lequel :
- on alimente les conduits d'amenée en vapeur d'eau ou en mélange de vapeur d'eau et un autre gaz choisi parmi le dioxyde de carbone et le dioxyde d'azote et simultanément les conduits d'amenée en gaz de serrage et d'équilibrage, la pression de la vapeur d'eau ou du mélange amené(e) étant sensiblement égale à celle du gaz de serrage et d'équilibrage ;
- on récupère l'hydrogène ou l'hydrogène et le monoxyde de carbone ou d'azote produit(s) par électrolyse ou co-électrolyse de la vapeur d'eau et simultanément le gaz d'équilibrage ayant circulé dans la chambre de serrage, dans leur conduit de récupération respectif.

Selon une variante, on alimente les conduits d'amenée en gaz drainant, tel que l'air, la pression du gaz drainant amené étant sensiblement égale à celle du gaz de serrage et d'équilibrage et on récupère l'oxygène produit.

L'invention a également pour objet un procédé de fonctionnement d'une pile à combustible SOFC selon la deuxième alternative, selon lequel :
- on alimente les conduits d'amenée en combustible, tel que l'hydrogène ou du méthane, et simultanément les conduits d'amenée en gaz de serrage et d'équilibrage;
- on alimente les conduits d'amenée en air ou oxygène, la pression du combustible et de l'air ou oxygène amenés étant sensiblement égale à celle du gaz de serrage et d'équilibrage ;
- on récupère le surplus de combustible, le gaz de serrage et d'équilibrage ayant circulé dans la chambre de serrage, l'eau produite d'une part et le surplus d'air ou d'oxygène d'autre part, dans leur conduit de récupération respectif.

Selon un mode de pilotage avantageux, on augmente ou on baisse la température du gaz de serrage et d'équilibrage dans ses conduits d'amenée de sorte à respectivement augmenter ou baisser la température de l'empilement.

Avantageusement, lors du fonctionnement, on augmente la pression du gaz de serrage et d'équilibrage dans ses conduits d'amenée en maintenant la pression des gaz réactifs, la différence entre la pression augmentée du gaz de serrage et d'équilibrage et la pression des gaz réactifs étant au plus égale à 500 mbar, de manière à obtenir un resserrage de l'empilement en fonctionnement.

Selon une variante avantageuse, on détecte la présence éventuelle de fuites de combustible dans le circuit de serrage et d'équilibrage contenant de l'air.

De préférence, les cellules élémentaires électrochimiques sont de type à cathode support.

Par «cellule à cathode support », on entend ici et dans le cadre de l'invention la définition déjà donnée dans le domaine de l'électrolyse de l'eau à haute température EHT et désignée sous l'acronyme anglais CSC pour « *Cathode-supported Cell* », c'est-à-dire une cellule dans laquelle l'électrolyte et l'électrode à oxygène (anode) sont disposées sur l'électrode à hydrogène (cathode) plus épaisse qui sert donc de support.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique montrant le principe de fonctionnement d'un électrolyseur d'eau à haute température,
- la figure 2 est une vue schématique en éclaté d'une partie d'un électrolyseur de vapeur d'eau à haute température (EHT) de type SOEC comprenant des interconnecteurs selon l'état de l'art,
- la figure 3 est une vue schématique en coupe partielle d'un électrolyseur EHT ou d'une pile à combustible de type SOFC selon l'état de l'art montrant la configuration des étanchéités et des contacts électriques au sein de l'empilement,
- la figure 4 est une vue schématique, selon une vue éclatée en perspective et partielle, un exemple de réacteur à empilement à oxydes solides de type SOEC/SOFC à haute température et un système de serrage de cet empilement selon l'état de l'art,
- les figures 5A et 5B sont des vues en perspective respectivement de dessus et de dessous d'un réacteur SOEC selon l'invention,
- la figure 6 est une vue en perspective et en éclaté partielle du réacteur SOEC selon l'invention montré en figures 5 et 6,
- les figures 7A et 7B sont des vues en perspective et en éclaté partiel, respectivement de dessus et de dessous, montrant plus en détail un motif d'électrolyse élémentaire d'un empilement du réacteur selon l'invention,
- les figures 8A et 8B correspondent au figures 7A et 7B et montrent en outre la circulation des gaz réactifs d'électrolyse ainsi que celle du gaz d'équilibrage,
- la figure 9 est une vue en coupe longitudinale partielle d'un réacteur SOEC selon l'invention, cette figure 9 montrant précisément les circuits des gaz réactifs et du gaz d'équilibrage au sein de l'empilement de motifs d'électrolyse élémentaires,
- la figure 10, est une vue agrandie de la figure 9, cette figure 10 montrant précisément le circuit du gaz d'équilibrage dans la chambre de serrage conformément à l'invention, c'est-à-dire au-dessus de l'empilement de motifs d'électrolyse élémentaires,
- les figures 11A et 11B sont des vues en perspective respectivement du dessous et du dessus de la plaque terminale supérieure dont le dessus est refermé par des tôles minces délimitant la chambre de serrage conforme à l'invention à l'intérieur de laquelle circule le gaz d'équilibrage,
- la figure 12 est une vue en éclaté montrant la constitution d'une chambre de serrage selon l'invention ainsi que la circulation du gaz d'équilibrage en son sein,
- la figure 13 est une vue en éclaté montrant la constitution d'une chambre de serrage selon une variante de l'invention ainsi que la circulation du gaz d'équilibrage en son sein,
- la figure 14 est une vue schématique montrant la pression exercée sur un empilement à oxydes solides SOEC/SOFC par le gaz au sein d'une chambre de serrage selon l'invention.

Les figures 1 à 4 relatives à l'état de l'art ont déjà été commentées en préambule. Elles ne sont donc pas détaillées ci-après.

Par souci de clarté, les mêmes éléments d'un réacteur d'électrolyse EHT selon l'état de l'art et d'un réacteur d'électrolyse EHT selon l'invention sont désignés par les mêmes références numériques.

Dans toutes les figures, les symboles et les flèches d'alimentation de vapeur d'eau H₂O, de distribution et de récupération de dihydrogène H₂, d'oxygène O₂, d'air et du courant électrique, ainsi que du gaz d'équilibrage sont montrés à des fins de clarté et de précision, pour illustrer le fonctionnement d'un réacteur d'électrolyse à haute température.

On précise ici dans l'ensemble de la présente demande, les termes « inférieur », « supérieur », « dessus », « dessous », « intérieur », « extérieur », « « interne » « externe» sont à comprendre par référence à un réacteur selon l'invention en configuration de fonctionnement sous pression, i.e. les cellules étant empilées à la verticale, la cathode SOEC étant positionnée au-dessus de l'anode dans la configuration présentée.

On précise également que les électrolyseurs ou piles à combustible décrits sont de type à oxydes solides (SOEC, acronyme anglais de « *Solid Oxyde Electrolyte Cell* »ou SOFC, acronyme anglais de « *Solid Oxide Fuel Cell* ») fonctionnant à haute température. Ainsi, tous les constituants (anode/électrolyte/cathode) d'une cellule d'électrolyse ou de pile sont des céramiques. La haute température de fonctionnement d'un électrolyseur (réacteur d'électrolyse) ou d'une pile est typiquement comprise entre 600°C et 1000°C. Typiquement, les caractéristiques d'une cellule d'électrolyse élémentaire SOEC convenant à l'invention, du type cathode support (CSC), peuvent être celles indiquées comme suit dans le tableau ci-dessous.

**TABLEAU**

| **Cellule d'électrolyse** | **Unité** | **Valeur** |
|---|---|---|
| **Cathode 2** | | |
| Matériau constitutif | | Ni-YSZ |
| Epaisseur | µm | 315 |
| Conductivité thermique | W m⁻¹ K⁻¹ | 13,1 |
| Conductivité électrique | Ω⁻¹ m⁻¹ | 10⁵ |
| Porosité | | 0,37 |
| Perméabilité | m² | 10⁻¹³ |
| Tortuosité | | 4 |
| Densité de courant | A.m⁻² | 5300 |

| **Anode 4** | | |
|---|---|---|
| Matériau constitutif | | LSM |
| Epaisseur | µm | 20 |
| Conductivité thermique | W m⁻¹ K⁻¹ | 9,6 |
| Conductivité électrique | Ω⁻¹ m⁻¹ | 1 10⁴ |
| Porosité | | 0,37 |
| Perméabilité | m² | 10⁻¹³ |
| Tortuosité | | 4 |
| Densité de courant | A.m⁻² | 2000 |

| **Electrolyte 3** | | |
|---|---|---|
| Matériau constitutif | | YSZ |
| Epaisseur | µm | |
| Résistivité | Ω m | 0,42 |

Enfin, également par souci de clarté, un conduit de circulation de gaz est désigné par une même référence numérique que ce soit pour la partie formée par un tuyau à l'extérieur de l'empilement ou pour la partie constituée par l'empilement des orifices percés à travers les composants.

Ainsi, le conduit d'alimentation en vapeur d'eau est désigné par la référence 50 à la fois pour le tuyau à l'extérieur et le conduit à l'intérieur de l'empilement. Il en va de même avec le conduit d'alimentation en gaz drainant 51 (O₂ ou air), le conduit d'alimentation en gaz d'équilibrage 52, le conduit de récupération de l'hydrogène produit 53, le conduit de récupération de l'oxygène produit 54 et enfin le conduit de récupération du gaz d'équilibrage 55.

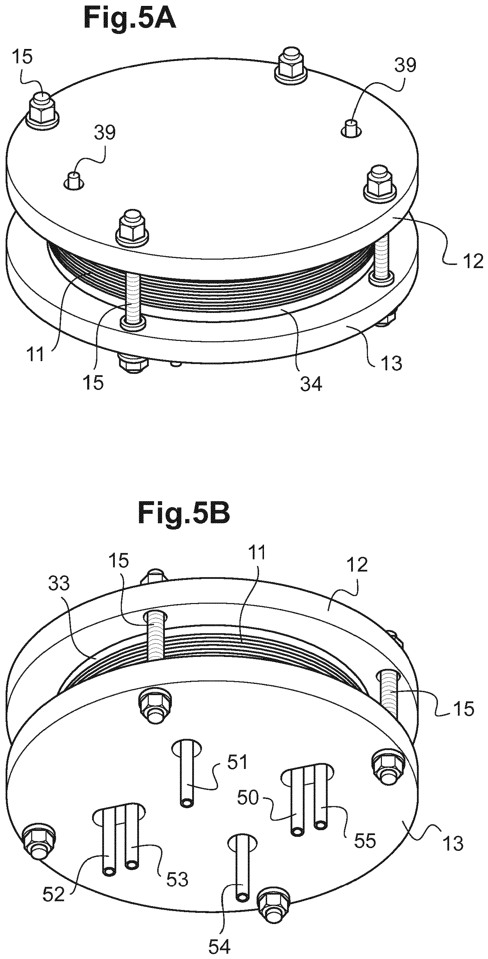

Les figures 5A et 5B montrent une vue générale extérieure d'un réacteur d'électrolyse SOEC, destiné à fonctionner sous pression.

Comme visible sur ces figures, le réacteur comporte tout d'abord une plaque de serrage supérieure 12 et une plaque de serrage inférieure 13, entre lesquelles un empilement 11 de motifs élémentaires à cellules en oxydes solides de type SOEC et des plaques épaisses d'extrémité 33, 34 sont serrés.

Plus précisément, les deux plaques d'extrémité ou plaques terminales 33, 34 encadrent l'empilement 11. Dans l'exemple illustré, les plaques de serrage 12, 13, terminales 33, 34 et l'empilement 11 ont une forme axisymétrique, favorable à un fonctionnement sous pression, autour d'un axe central X perpendiculaire au plan des cellules.

Le serrage est réalisé au moyen boulons de serrage 15, 16, 17, 18, au nombre de quatre équirépartis dans l'exemple illustré.

Plus précisément, chaque boulon comprend une tige de serrage filetée 15 s'étendant chacune au travers d'un orifice de serrage 14 de la plaque de serrage supérieure 12 et au travers d'un orifice de serrage 14 correspondant de la plaque de serrage inférieure 13 pour permettre l'assemblage entre elles des plaques de serrage supérieure 12 et inférieure 13. De façon avantageuse, les tiges de serrage 15 peuvent avoir une forme cylindrique avec un diamètre supérieur ou égal à 16 mm.

Un premier écrou de serrage 16 associé à une rondelle de serrage 17 est prévu au niveau de chaque orifice de serrage 14 de la plaque de serrage supérieure 12, pour coopérer par vissage avec chaque tige de serrage 15 correspondante insérée au travers de l'orifice de serrage 14. La première rondelle de serrage 17 est agencée entre le premier écrou de serrage 16 et la plaque de serrage supérieure 12.

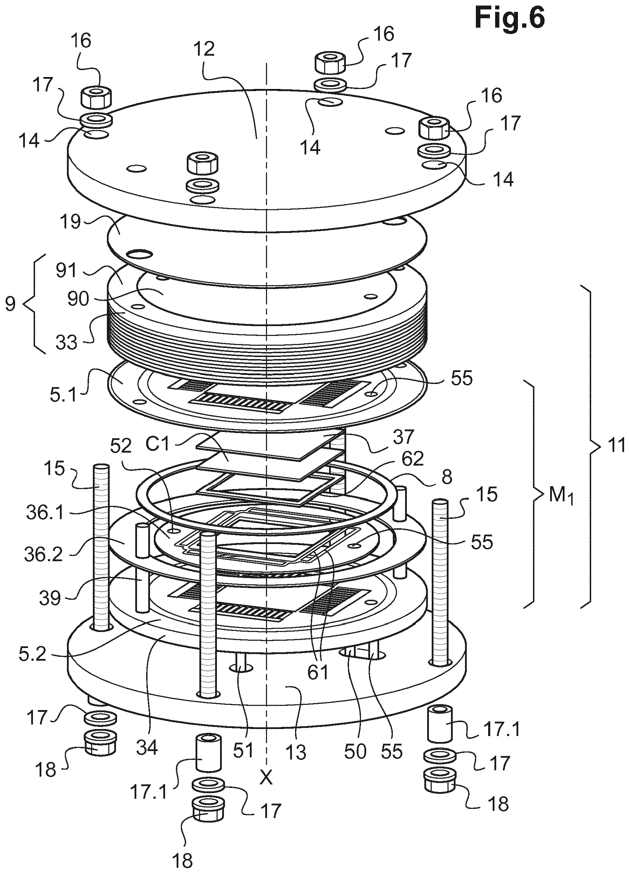

Un deuxième écrou de serrage 18 associé à une deuxième rondelle de serrage 17, pour coopérer par vissage avec chaque tige de serrage filetée 15 insérée au travers d'un orifice de serrage 14 de la plaque de serrage inférieure 13. La deuxième rondelle de serrage 17 est agencée entre le deuxième écrou de serrage 18 et la plaque de serrage inférieure 13. En outre, comme montré en figure 6, un tube17.1 peut être insérée entre une tige filetée 15 et un orifice de serrage 14 correspondant de la plaque inférieure 13. Cette deuxième rondelle 17 est isolante électrique, tout comme le tube 17.1, de manière à pouvoir admettre des potentiels électriques différents entre la plaque de serrage supérieure 12 et la plaque de serrage inférieure 13.

Avantageusement, les plaques de serrage supérieure 12 et inférieure 13 sont réalisées en acier austénitique réfractaire de type AISI 310, avec pour chacune une épaisseur de l'ordre de 25 mm.

Avantageusement encore, les tiges de serrage 15 et les premier 16 et deuxième 18 écrous de serrage sont avantageusement réalisés en superalliage à base de nickel de type Inconel 625.

Les rondelles de serrage 17 supérieures sont de préférence réalisées en acier austénitique réfractaire de type AISI 310. L'épaisseur des rondelles de serrage 17 peut être ajustée en fonction du nombre de motifs élémentaires présents dans l'empilement 11 à cellules électrochimiques à oxydes solides. Pour des raisons d'isolation électrique, les rondelles de serrage inférieures 17 sont de préférence réalisées en zircone ou en Macor®.

Différentes tuyauteries sont prévues pour amener les gaz réactifs et le gaz d'équilibrage au travers de l'empilement et pour récupérer les gaz produits par l'électrolyse de l'eau à haute température, typiquement entre 600 et 1000°C, ainsi que le gaz d'équilibrage et les extraire de l'empilement. Chaque gaz peut être régulé en débit et en pression dans sa tuyauterie correspondante.

Ainsi, une tuyauterie 50 permet d'amener la vapeur d'eau à travers l'empilement aux différentes cathodes des cellules de motifs élémentaires, l'hydrogène produit avec la vapeur d'eau éventuellement restante étant récupéré et extrait de l'empilement par la tuyauterie 53.

De même, une tuyauterie 51 permet d'amener un gaz drainant, tel que l'oxygène ou l'air, à travers l'empilement aux différentes anodes des cellules de motifs élémentaires, l'oxygène produit étant récupéré et extrait de l'empilement par la tuyauterie 54.

Enfin, une tuyauterie 52 permet d'amener un gaz d'équilibrage au travers de l'empilement et comme décrit ci-après, dans une chambre de serrage 9 au-dessus de la plaque terminale 34 puis est extrait par la tuyauterie 55.

La réalisation de l'intérieur du réacteur d'électrolyse est montrée en figure 6 où on peut voir en éclaté un motif élémentaire M₁ de l'empilement 11 à n motifs élémentaires identiques M₁...à Mn. Un motif élémentaire M1 comprend une cellule électrochimique élémentaire C1 intercalée entre un premier 5.1 et un deuxième 5.2 interconnecteur électrique et fluidique.

Comme visible sur cette figure 6, une plaque en matériau isolant électrique 19 est agencée entre la plaque de serrage supérieure 12 et la plaque terminale supérieure 33. Cette plaque d'isolation électrique 19 est une cale d'isolation électrique entre l'empilement 11 à oxydes solides et la plaque de serrage supérieure 12. Cette plaque d'isolation électrique 19 est avantageusement réalisée en mica.

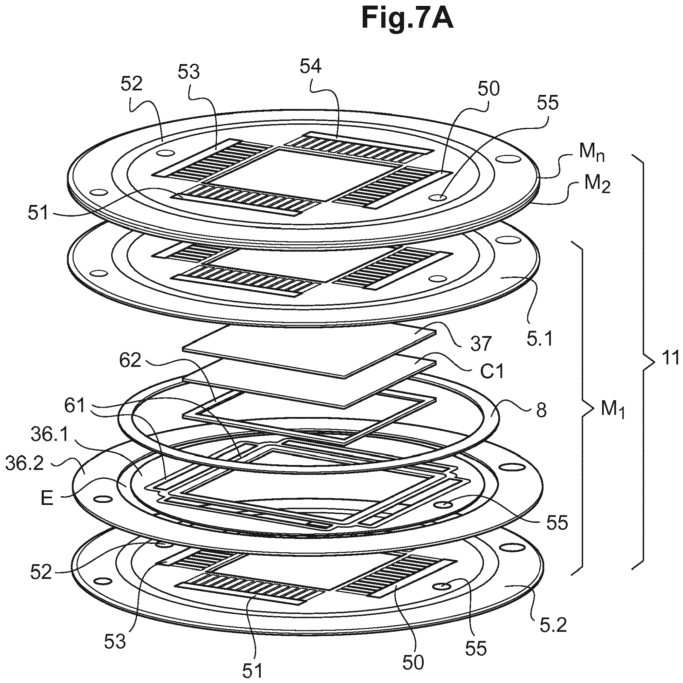

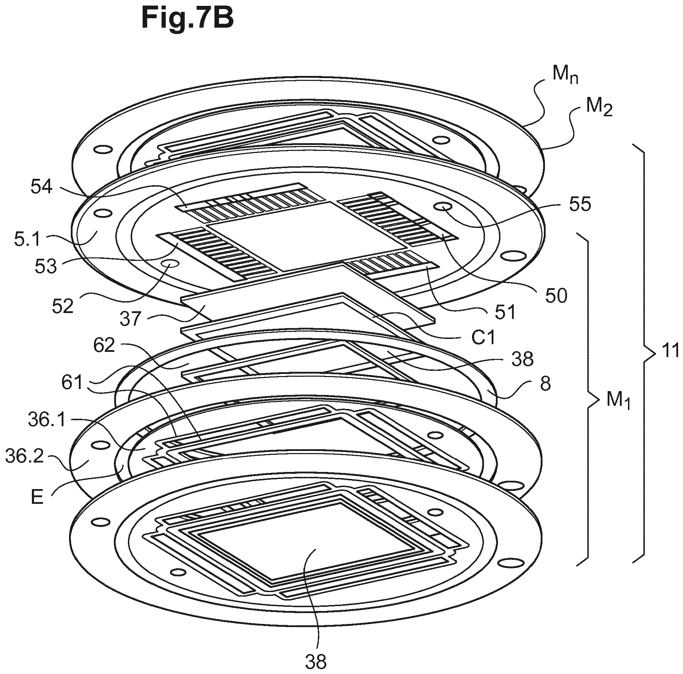

Le motif élémentaire M₁ est représenté plus en détail en figures 7A et 7B.

Comme on peut le voir sur ces figures, un motif élémentaire M₁ comporte une une couche formant cale isolante en deux parties 36.1, 36.2, qui est agencée autour de chaque cellule électrochimique C1 et entre deux interconnecteurs adjacents.

La cale isolante intérieure 36.1 permet le centrage de chaque cellule électrochimique C1 et l'isolation électrique entre les interconnecteurs adjacents. Cette cale peut également servir de support pour les joints d'étanchéité 61 comme détaillé ci-après.

Les cales isolantes intérieure 36.1 et 36.2 sont de préférence réalisées en mica.

Un motif élémentaire M₁ comporte en outre première couche de contact 37 entre la cathode de la cellule C1 et chaque interconnecteur 5.1 ou la plaque terminale supérieure 33 pour le motif élémentaire Mn en extrémité supérieure d'empilement 11, et comporte une deuxième couche de contact 38 entre l'anode de la cellule C1 et chaque interconnecteur 5.2 ou la plaque terminale inférieure 34 pour le motif élémentaire M en extrémité inférieure d'empilement 11.

Ces couches de contact 37, 38 permettent avantageusement d'améliorer le passage du courant électrique entre les interconnecteurs 5.1, 5.2 et les cellules électrochimiques C1.

Dans les exemples illustrés, la première couche de contact 37 est formée avantageusement par une grille en nickel, tandis que la deuxième couche de contact 38 est une couche céramique oxyde de type manganite de lanthane strontium (ou encore LSM pour « Lanthanum Strontium Manganite » en anglais).

Comme on peut le voir sur la figure 6, il est prévu deux colonnes de guidage 39, s'étendant au travers d'orifices de guidage 40 formés dans la plaque terminale supérieure 33, la plaque terminale inférieure 34, les interconnecteurs 5.1, 5.2, des cales isolantes 36.2 et la plaque de serrage supérieure 12. Ces colonnes de guidage 39 isolantes électriquement, en Macor® par exemple, permettent le guidage en écrasement de l'empilement 11 par compression lors de l'assemblage avec serrage du réacteur.

Chaque interconnecteur 5.1, 5.2 est constitué de trois tôles minces planes, percées de lumières et allongées selon deux axes de symétrie orthogonaux entre eux, les tôles planes étant stratifiées et assemblées entre elles par soudure. Pour mieux appréhender la réalisation à trois tôles minces des interconnecteurs 5.1, 5.2, on pourra se reporter avantageusement à la demande de brevet FR 3040061A1.

Les tôles fines sont de préférence réalisées en acier, de préférence encore en acier ferritique à environ 20% de chrome, de préférence en CROFER® 22APU ou le F18TNb, ou à base Nickel de type Inconel® 600 ou Haynes 230®.

La stratification et l'assemblage des tôles fines dans ces interconnecteurs 5.1, 5.2 est réalisée de telle sorte que :
- une partie du conduit d'alimentation en vapeur d'eau 50 et du conduit de récupération de l'hydrogène produit 53 est délimitée par des lumières pratiquées dans les tôles et qui communiquent entre elles en laissant la vapeur d'eau d'alimentation circuler à travers chaque cathode pour produire l'hydrogène ;
- une partie du conduit d'alimentation en gaz drainant 51 et du conduit de récupération de l'oxygène produit 54 est délimitée par des lumières pratiquées dans les tôles et qui communiquent entre elles en laissant le gaz drainant circuler à travers chaque anode et pour produire l'oxygène ; la circulation aux anodes étant à courant croisé par rapport à celle aux cathodes ;
- une partie du conduit d'alimentation en gaz d'équilibrage 52 est délimitée par des lumières pratiquées dans les tôles et qui communiquent entre elles en laissant le gaz d'équilibrage traverser les interconnecteurs 5.1, 5.2, sans circulation aux cathodes et aux anodes ;
- une partie du conduit de récupération en gaz d'équilibrage 55 est délimitée par des lumières pratiquées dans les tôles et qui communiquent entre elles en laissant le gaz d'équilibrage traverser les interconnecteurs 5.1, 5.2, sans circulation aux cathodes et aux anodes.

Un premier joint d'étanchéité 61 de forme axisymétrique autour de l'axe central X, est agencé à la périphérie de chaque cellule élémentaire C1 et en appui à la fois contre chacun des deux interconnecteurs 5.1, 5.2. Ce joint 61 est prévu pour réaliser l'étanchéité autour du compartiment cathodique. Comme montré, le premier joint 61 est réalisé sur et sous la cale isolante intérieure 36.1.

Un deuxième joint d'étanchéité 62 de forme axisymétrique autour de l'axe central, est agencé à la périphérie de l'anode de chaque cellule élémentaire C1 et en appui à la fois contre l'interconnecteur inférieur 5.2 et contre l'électrolyte. Ce joint est prévu pour réaliser l'étanchéité autour du compartiment anodique. Les joints d'étanchéité 61 et 62 sont à base de verre et/ou de vitrocéramique.

Un dispositif d'isolation électrique et d'étanchéité 8 de forme axisymétrique autour de l'axe central X est agencé à la périphérie du premier joint d'étanchéité 61 autour du compartiment cathodique, et il est en appui respectivement contre l'interconnecteur supérieur 5.1 et contre l'interconnecteur inférieur 5.2.

Plus précisément, le dispositif 8 est agencé dans un espace annulaire E entre les cales isolantes intérieure 36.1 et extérieure 36.2, la cale intérieure 36.1 portant le joint d'étanchéité 61. Des espaces annulaires correspondants E peuvent être réalisés dans l'interconnecteur supérieur 5.1 et inférieur 5.2. Ainsi, comme précisé avant, chaque interconnecteur 5.1, 5.2 étant constitué de trois tôles minces, pour délimiter un espace annulaire, on peut réaliser une découpe annulaire dans chacune des deux tôles d'extrémité mais pas dans la tôle centrale. Les espaces annulaires E réalisés à la fois dans les interconnecteurs 5.1, 5.2 et dans les cales d'isolation électrique permettent de positionner avec un centrage le dispositif isolant 8.

Le dispositif 8 peut être avantageusement constitué d'une rondelle isolante électriquement formant une cale, enserrée par des joints d'étanchéité métalliques sans contact l'un avec l'autre. Chacun de ces joints métalliques est alors en appui respectivement contre l'interconnecteur supérieur 5.1 et inférieur 5.2. La rondelle isolante peut être avantageusement en zircone et les deux joints métalliques à base d'alliage comprenant du chrome et du fer, par exemple en Fecralloy®. Cette rondelle isolante peut aussi être brasée sur les interconnecteurs.

Comme on peut le voir sur les différentes figures, les conduit d'amenée 52 et de récupération 55 d'un gaz d'équilibrage, réalisés dans les interconnecteurs 5.1, 5.2 et la cale isolante intérieure 36.1 débouchent chacun sur l'espace délimité entre le premier joint 61 et le dispositif d'isolation et d'étanchéité 8 de sorte à réaliser une distribution homogène du gaz d'équilibrage depuis son conduit d'amenée jusqu'à son conduit de récupération. On équilibre ainsi les pressions de part et d'autre du premier joint d'étanchéité 61 lors du fonctionnement en pression du réacteur. Ainsi, le dispositif 8 est adapté pour résister à un différentiel de pressions important entre la pression du gaz d'équilibrage, que l'on amène à la valeur la plus proche possible de la pression de fonctionnement du réacteur EHT, typiquement de 10 à 30 bars et la pression extérieure à l'empilement de modules, typiquement 1 bar.

Les inventeurs ont pu constater qu'en fonctionnement sous pression du réacteur et avec uniquement les composants de l'empilement 11, les plaques de serrage 12, 13 et la boulonnerie de serrage 15, 16, 17, 18 envisagées, telles que décrites ci-dessus, un resserrage progressif de la boulonnerie était nécessaire pour maintenir l'empilement étanche et sans perte de contact électrique entre module.

Ils ont alors analysé que la cause de ce resserrage était due à l'effet de fond, c'est-à-dire de la poussée fluidique des gaz sous pression au sein de l'empilement 11, sur l'extrémité supérieure du réacteur provoquant l'allongement des tiges de serrage.

Ainsi, selon l'invention, il est prévu une chambre de serrage souple et étanche 9, alimentée par le gaz d'équilibrage qui a pour avantage d'être introduit dans le réacteur à une pression sensiblement égale à celle des gaz réactifs qui induisent l'effet de fond.

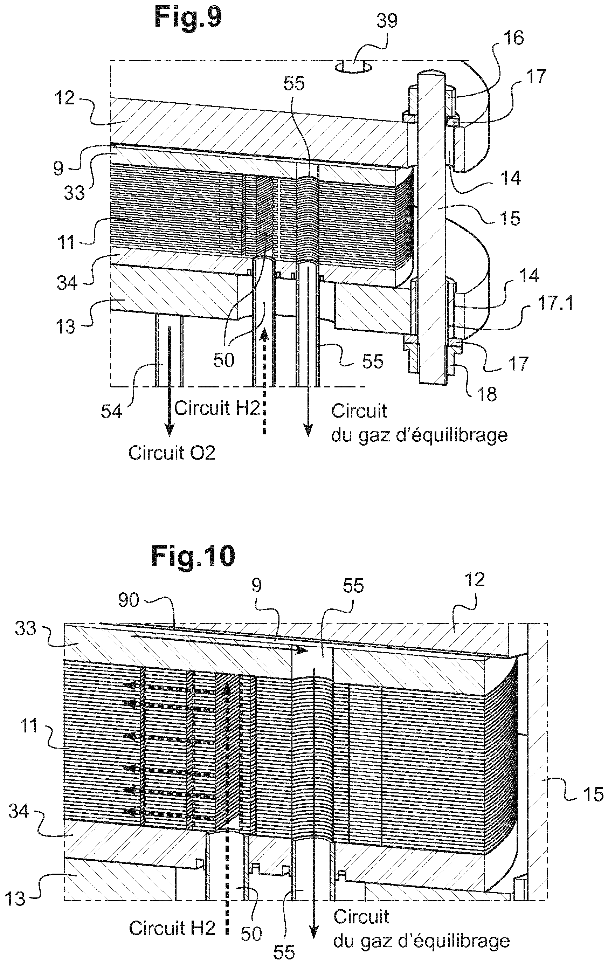

Comme montrée en figures 6, 9 et 10, la chambre de serrage 9 selon l'invention est délimitée entre la plaque terminale supérieure 33 et la plaque d'isolation électrique 19. Elle est suffisamment souple pour suivre l'allongement des tiges de serrage.

Les conduits d'amenée 52 et de récupération 55 du circuit de serrage et gaz d'équilibrage débouchent à l'intérieur de la chambre 9. De la sorte, le gaz de serrage et d'équilibrage vient circuler dans la chambre de serrage 9, au-dessus de l'empilement de motifs élémentaires, la pression régnant alors dans la chambre 9 venant alors équilibrer la pression due aux gaz réactifs et produits au sein de l'empilement 11. Autrement dit, la circulation du gaz de serrage et d'équilibrage sous pression au sein de la chambre de serrage vient compenser de manière passive l'effet de fond évoqué ci-avant.

Dans les exemples illustrés, la chambre de serrage étanche 9 est délimitée par le dessus de la plaque terminale supérieure 33 en tant que fond, d'une plaque 90 en tant que couvercle et d'un anneau 91 en tant que paroi latérale. Ces différentes parties, i.e. le fond 33, le couvercle 90 et la paroi latérale 91 de la chambre sont assemblés entre eux par soudage. Cette réalisation est très avantageuse car souple mais très robuste et compacte, sans aucun impact sur la conception du réacteur d'électrolyse.

Avec les matériaux préférés évoqués ci-dessus, le dimensionnement de la boulonnerie de serrage 15, 16, 17, 18 permet de lui garantir un comportement élastique sous l'effet de la pression au sein de la chambre de serrage 9, typiquement de l'ordre de 2 tonnes pour un empilement 11 fonctionnant sous une pression à 10 bars, et donc d'éviter tout fluage ou relaxation malgré les niveaux de température envisagés entre 20°C et 1000°C, et ce malgré les dilatations différentielles de chacun des composants du réacteur.

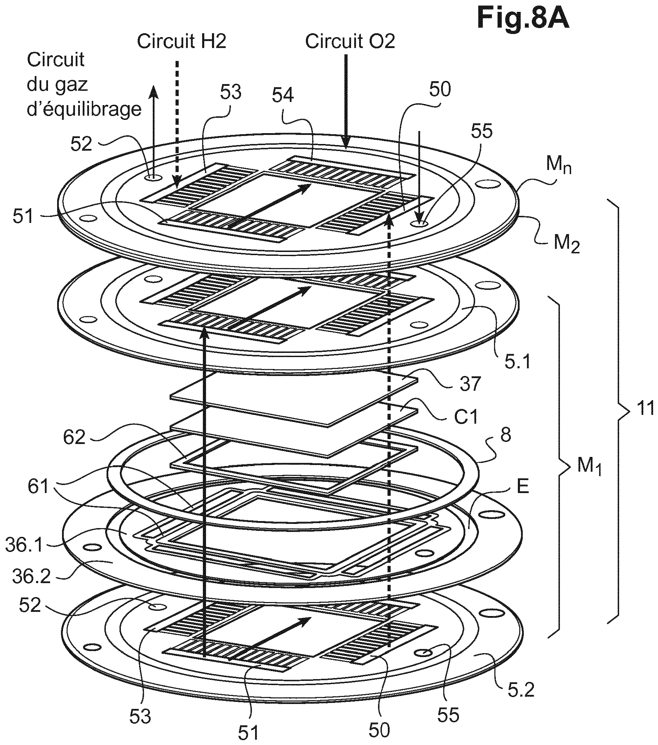

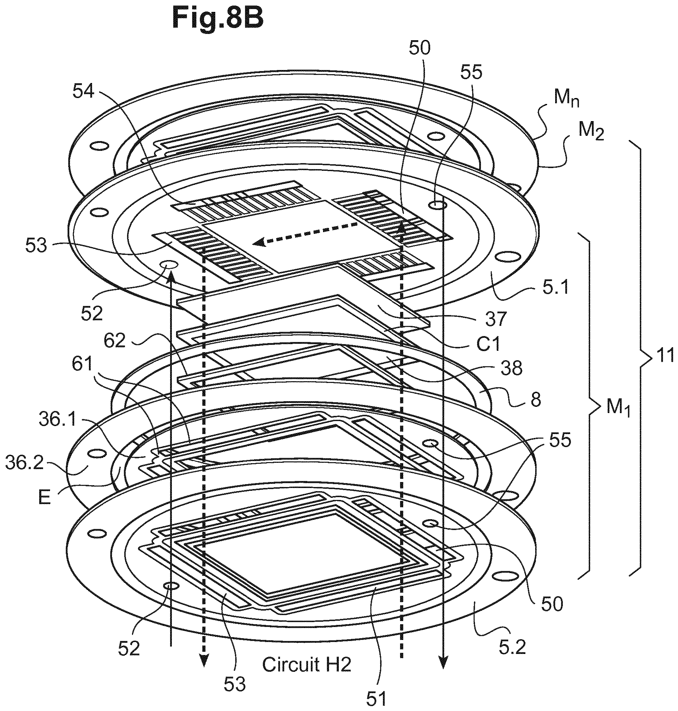

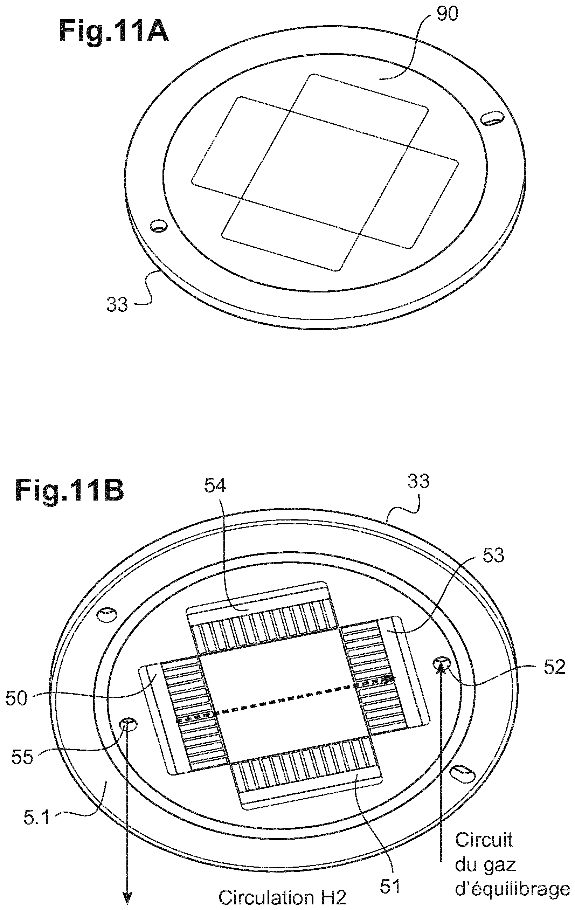

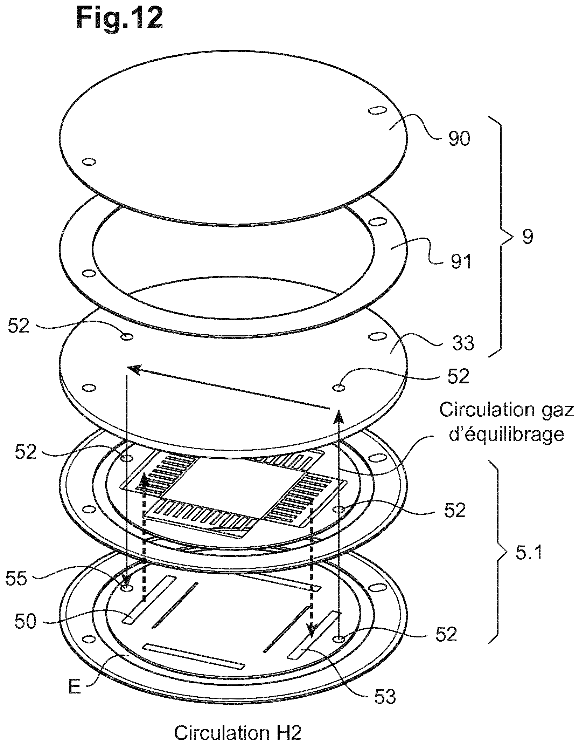

On décrit maintenant le fonctionnement d'un réacteur d'électrolyse EHT comprenant plusieurs modules selon l'invention qui viennent d'être décrits en relation avec les figures 5A à 12.

On alimente le tuyau 50 en vapeur d'eau et donc les conduits d'amenée en vapeur d'eau 50 au sein de l'empilement et simultanément le tuyau 52 en gaz de serrage et d'équilibrage et donc le conduit d'amenée 52 et l'espace annulaire, la pression de la vapeur d'eau amenée étant sensiblement égale à celle du gaz d'équilibrage.

Simultanément également, on alimente le tuyau 51 en air, en tant que gaz drainant, et donc le conduit d'amenée 51, la pression de l'air amené étant sensiblement égale à celle du gaz d'équilibrage.

La vapeur d'eau distribuée radialement depuis le conduit d'amenée 50 et l'hydrogène produit par l'électrolyse de la vapeur d'eau, est récupéré radialement dans le conduit de récupération 53 et donc par le tuyau de récupération 53.

Le gaz de serrage et d'équilibrage circule dans l'espace entre joint d'étanchéité 61 et dispositif 8 sur toute la hauteur de l'empilement 11, jusqu'à arriver dans la chambre de serrage 9 puis est récupéré en sortie de celle-ci dans le conduit de récupération 55 et donc par le tuyau de récupération 55. La pression régnant alors à l'intérieur de la chambre de serrage 9 compense la pression exercée sur la plaque terminale supérieure 34 par les gaz réactifs et produits au sein de l'empilement.

L'air distribué radialement depuis le conduit d'amenée 51 et l'oxygène produit par l'électrolyse de la vapeur d'eau est récupéré par le tuyau de récupération 54.

Dans certaines configurations, notamment lorsqu'on souhaite faire fonctionner l'empilement SOEC 11 uniquement à la pression atmosphérique, on peut s'affranchir de la réalisation du circuit de gaz d'équilibrage au sein de l'empilement et réaliser un circuit du gaz de serrage qui ne traverse pas ce dernier.

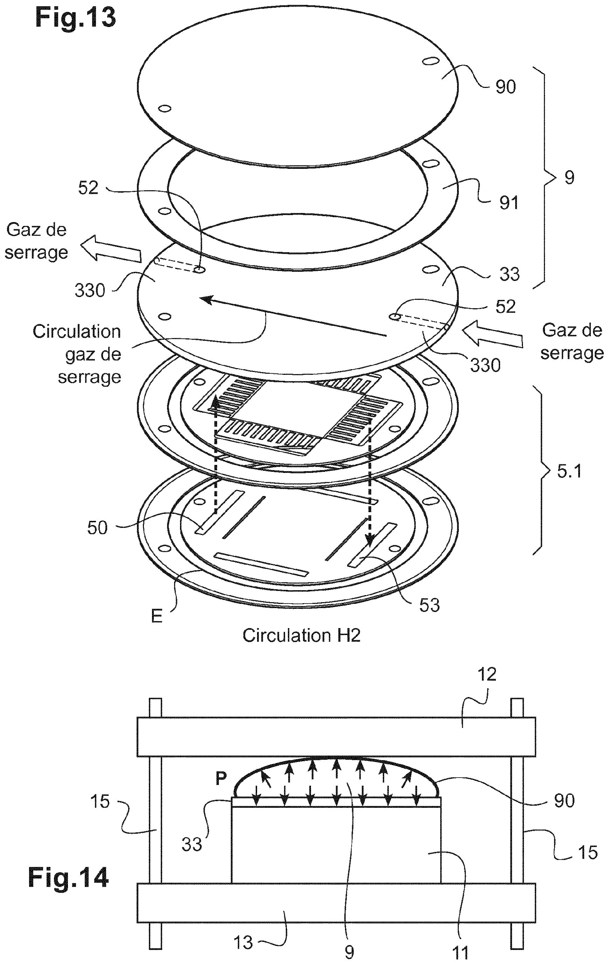

Un mode de réalisation d'un circuit de gaz de serrage indépendant de l'empilement est représenté en figure 13. Selon ce mode, le circuit de gaz de serrage comprend deux conduits débouchant 330, percés directement dans l'épaisseur de la plaque terminale 33 délimitant la chambre de serrage 9. Ainsi, le gaz de serrage alimente directement la chambre de serrage 9, indépendamment de la circulation des gaz au sein de l'empilement 11. Le gaz de serrage pénètre ainsi dans la chambre 9 par l'un des conduits 330 puis est évacué en sortie de chambre 9 par l'autre des conduits 330.

En figure 14, on a représenté de manière schématique, volontairement très exagérée, sous la forme de flèches la pression du gaz de serrage P exercée à l'intérieur de la chambre 9 dont la plaque pleine joue le rôle de membrane souple élastique.

Ainsi, cette pression de gaz P à l'intérieur de la chambre de 9 permet de compenser, c'est-à-dire suivre l'allongement subi pas les tirants mécaniques 15, 16, 17, 18 lors du fonctionnement sous pression du réacteur SOEC à empilement 11. Le suivi de cet allongement empêche donc que l'empilement ne s'ouvre sous la pression interne des gaz réactifs.

D'autres variantes et avantages de l'invention peuvent être réalisés sans pour autant sortir du cadre de l'invention.

Bien que décrite pour une électrolyse de l'eau à haute température, le réacteur à empilement de motif élémentaires M₁ à Mn peut tout aussi bien être utilisé pour une co-électrolyse de vapeur d'eau mélangée soit avec du dioxyde de carbone soit du dioxyde d'azote, le gaz d'équilibrage circulant de la même manière avec passage sous pression dans la chambre de serrage 9.

Bien que décrite pour une électrolyse de l'eau à haute température, le réacteur à empilement de motif élémentaires M₁ à Mn peut tout aussi bien être utilisé en tant que pile à combustible SOFC. Dans ce cas, on alimente les tuyaux d'amenée 50 en combustible, par exemple en hydrogène ou méthane, on alimente toujours les tuyaux 52 en gaz d'équilibrage et on alimente les tuyaux 51 en air ou en oxygène. Le gaz d'équilibrage circule également de la même manière avec passage sous pression dans la chambre de serrage 9.

La chambre de serrage 9 illustrée est réalisée avec une paroi latérale 91 annulaire entre la plaque pleine formant le couvercle 90 et la plaque terminale supérieure 33 en tant que fond. On peut aussi réaliser une chambre de serrage 9 en s'affranchissant de la paroi annulaire 91 et en assemblant directement par soudure périphérique la plaque terminale supérieure 33 avec la plaque pleine 90, cette dernière jouant toujours le rôle de membrane souple élastique sous la pression du gaz régnant à l'intérieur de la chambre.

L'invention n'est pas limitée aux exemples qui viennent d'être décrits ; on peut notamment combiner entre elles des caractéristiques des exemples illustrés au sein de variantes non illustrées.

L'expression "comportant un(e)" et l'expression "comprenant un(e)" doit s'entendre comme respectivement "comportant au moins un(e)" et "comprenant au moins un(e)".

## Revendications

1. Dispositif électrochimique, constituant un réacteur d'électrolyse ou de co-électrolyse SOEC ou une pile à combustible SOFC, destiné à fonctionner à haute température, comprenant :
- un empilement (11) de cellules électrochimiques à base d'oxydes solides de type SOEC/SOFC ;
- deux plaques d'extrémité (33, 34), dites plaques terminales, entre lesquelles l'empilement est agencé ;
- deux plaques de serrage (12, 13) de l'empilement, entre lesquelles les plaques d'extrémité et l'empilement sont agencés;
- des moyens de serrage (15, 16, 17, 18) entre les plaques de serrage, les moyens de serrage étant adaptés pour serrer et maintenir serré l'empilement entre les plaques terminales, quelle que soit la température entre la température ambiante et les hautes températures de fonctionnement du dispositif;
- une chambre de serrage (9) délimitée entre l'une des plaques terminales (33) et la plaque de serrage adjacente (12), la chambre de serrage étant reliée à un circuit de gaz de serrage en surpression par rapport à l'intérieur de l'empilement.

2. Réacteur SOEC ou pile à combustible SOFC selon la revendication 1, le circuit de gaz de serrage étant indépendant des circuits de gaz réactifs.

3. Réacteur SOEC ou pile à combustible SOFC selon la revendication 1 ou 2, le circuit de gaz de serrage ne traversant pas l'empilement (11).

4. Réacteur SOEC ou pile à combustible SOFC selon la revendication 3, le circuit de gaz de serrage comprenant deux conduits débouchant (330), percés dans l'épaisseur de la plaque terminale (33) délimitant la chambre de serrage (9).

5. Réacteur SOEC ou pile à combustible SOFC selon la revendication 1 ou 2, le circuit de gaz de serrage traversant l'empilement (11).

6. Réacteur d'électrolyse ou de co-électrolyse à haute température de type SOEC, selon la revendication 5,
dans lequel l'empilement est un empilement (11) de motifs élémentaires, chaque motif élémentaire comprenant:
• une cellule (C1) électrochimique élémentaire formée d'une cathode (2.1), d'une anode (4.1), et d'un électrolyte (3.1) intercalé entre la cathode et l'anode,
• un premier (5.1) et un deuxième (5.2) dispositif formant chacun un interconnecteur électrique et fluidique, constitué chacun d'un composant en matériau conducteur électronique et étanche aux gaz; les premier et deuxième interconnecteurs étant agencés de part et d'autre de la cellule élémentaire; le premier interconnecteur (5.1) étant percé d'un conduit d'amenée de la vapeur d'eau (50), débouchant sur la cellule du côté de la cathode (2.1) et, d'un conduit de récupération de l'hydrogène produit (53), débouchant à la périphérie de la cellule du côté de la cathode de sorte à réaliser une distribution homogène respectivement de la vapeur d'eau amenée et de l'hydrogène produit, depuis le conduit d'amenée jusqu'au conduit de récupération; le deuxième interconnecteur (5.2) étant percé d'un conduit de récupération de l'oxygène produit (54), débouchant à la périphérie de la cellule du côté de l'anode (4.1) de sorte à réaliser une distribution homogène de l'oxygène produit jusqu'au conduit de récupération;
• un premier joint d'étanchéité (61) agencé à la périphérie de la cellule élémentaire et en appui à la fois contre le premier interconnecteur et contre le deuxième interconnecteur;
• un deuxième joint d'étanchéité (62) agencé à la périphérie de l'anode de la cellule élémentaire et en appui à la fois contre le deuxième interconnecteur et contre l'électrolyte ; les premier et deuxième joints d'étanchéité étant à base de verre et/ou de vitrocéramique ;
• un dispositif d'isolation et d'étanchéité (8) agencé à la périphérie du premier joint d'étanchéité et en appui respectivement contre le premier et contre le deuxième interconnecteur;
• au moins un conduit d'amenée (52) et au moins un conduit de récupération (55) du gaz de serrage, réalisés dans le premier et le deuxième interconnecteurs et débouchant chacun sur l'espace délimité entre le premier joint (61) et le dispositif d'isolation et d'étanchéité (8), de sorte à réaliser une distribution homogène du gaz de serrage depuis son conduit d'amenée jusqu'à son conduit de récupération, le gaz de serrage constituant ainsi en outre un gaz d'équilibrage pour équilibrer les pressions de part et d'autre du premier joint d'étanchéité lors du fonctionnement en pression du réacteur ;
les conduits d'amenée (52) et de récupération (55) du circuit de gaz de serrage et d'équilibrage débouchant à l'intérieur de la chambre de serrage.

7. Dispositif électrochimique selon la revendication 4, constituant une pile à combustible de type SOFC, dans laquelle l'empilement est un empilement (11) de motifs élémentaires, chaque motif élémentaire comprenant:
• une cellule (C1) électrochimique élémentaire à oxydes solides formée d'une cathode (2.1), d'une anode (4.1), et d'un électrolyte (3.1) intercalé entre la cathode et l'anode,
• un premier (5.1) et un deuxième (5.2) dispositif formant chacun un interconnecteur électrique et fluidique, constitué chacun d'un composant en matériau conducteur électronique et étanche aux gaz; les premier et deuxième interconnecteur étant agencés de part et d'autre de la cellule élémentaire ; le premier interconnecteur étant percé d'un conduit d'amenée de combustible (50), débouchant sur la cellule du côté de l'anode (4.1) et, d'un conduit de récupération (53) de l'eau produite, à la périphérie de la cellule du côté de l'anode de sorte à réaliser une distribution homogène respectivement du combustible amené et de l'eau produite, depuis le conduit d'amenée jusqu'au conduit de récupération; le deuxième interconnecteur étant percé d'un conduit d'amenée d'air ou d'oxygène, débouchant sur la cellule du côté de la cathode (2.1) et, d'un conduit de récupération du surplus d'air ou d'oxygène, débouchant à la périphérie de la cellule du côté de la cathode de sorte à réaliser une distribution homogène de l'air ou de l'oxygène, depuis le conduit d'amenée jusqu'au conduit de récupération;
- un premier joint d'étanchéité (61) agencé à la périphérie de la cellule élémentaire et en appui à la fois contre le premier interconnecteur et contre le deuxième interconnecteur;
- un deuxième joint d'étanchéité (62) agencé à la périphérie de la cathode de la cellule élémentaire et en appui à la fois contre le deuxième interconnecteur et contre l'électrolyte ; les premier et deuxième joints d'étanchéité étant à base de verre et/ou de vitrocéramique ;
- un dispositif d'isolation et d'étanchéité (8) agencé à la périphérie du premier joint d'étanchéité et en appui respectivement contre le premier et contre le deuxième interconnecteur;
- au moins un conduit d'amenée (52) et au moins un conduit de récupération (55) du gaz de serrage, réalisés dans le premier et le deuxième interconnecteurs et débouchant chacun sur l'espace délimité entre le premier joint (61) et le dispositif d'isolation et d'étanchéité (8) de sorte à réaliser une distribution homogène du gaz de serrage depuis son conduit d'amenée jusqu'à son conduit de récupération, le gaz de serrage constituant ainsi en outre un gaz d'équilibrage pour équilibrer les pressions de part et d'autre du premier joint d'étanchéité lors du fonctionnement en pression de la pile;
les conduits d'amenée (52) et de récupération (55) du circuit de gaz de serrage et d'équilibrage débouchant dans la chambre de serrage.

8. Réacteur SOEC ou pile à combustible SOFC selon l'une des revendications précédentes, la forme générale de l'empilement, des plaques d'extrémité et de la chambre de serrage étant axisymétrique.

9. Réacteur SOEC ou pile à combustible SOFC selon l'une des revendications précédentes, la chambre de serrage étant délimitée au-dessus de l'empilement, entre la plaque terminale supérieure (33) et la plaque de serrage supérieure (12) séparée d'une plaque d'isolation électrique (19).

10. Réacteur SOEC ou pile à combustible SOFC selon la revendication 9, la chambre de serrage (9) étant délimitée par le dessus de la plaque terminale supérieure (33) en tant que fond, par une plaque pleine (90) en tant que couvercle et un anneau (91) en tant que paroi latérale, le fond (33), le couvercle (90) et la paroi latérale (91) de la chambre étant assemblés entre eux par soudage.

11. Réacteur SOEC ou pile à combustible SOFC selon l'une des revendications précédentes, les moyens de serrage comportant deux boulons de serrage (15, 16, 17, 18) agencés en traversant les plaques de serrage;, chaque boulon de serrage comprenant de préférence :
- une tige de serrage filetée (15),
- un premier écrou de serrage (16) associé à une première rondelle de serrage (17) destinés à coopérer par vissage avec la tige de serrage filetée (15) insérée au travers d'un orifice de serrage (14) de la plaque de serrage supérieure (12), la première rondelle de serrage (17) étant agencée entre le premier écrou de serrage (16) et la plaque de serrage supérieure (12);
- un deuxième écrou de serrage (18) associé à une deuxième rondelle de serrage (17) destinés à coopérer par vissage avec la tige de serrage filetée (15) insérée au travers d'un orifice de serrage (14) de la plaque de serrage inférieure (13), la deuxième rondelle de serrage (17) étant agencée entre le deuxième écrou de serrage (16) et la plaque de serrage inférieure (13), et de préférence un tube (17.1) isolant électrique agencé entre la tige de serrage (15) et l'orifice de serrage de la plaque de serrage inférieure (13), la deuxième rondelle de serrage (17) étant également isolante électrique.

12. Procédé de fonctionnement d'un réacteur SOEC selon l'une des revendications 5 à 6 et 8 à 11, selon lequel :
- on alimente les conduits d'amenée (50) en vapeur d'eau ou en mélange de vapeur d'eau et un autre gaz choisi parmi le dioxyde de carbone et le dioxyde d'azote et simultanément les conduits d'amenée (52) en gaz de serrage et d'équilibrage, la pression de la vapeur d'eau ou du mélange amené(e) étant sensiblement égale à celle du gaz de serrage et d'équilibrage ;
- on récupère l'hydrogène ou l'hydrogène et le monoxyde de carbone ou d'azote produit(s) par électrolyse ou co-électrolyse de la vapeur d'eau et simultanément le gaz d'équilibrage ayant circulé dans la chambre de serrage (9), dans leur conduit de récupération respectif (53, 55).

13. Procédé de fonctionnement d'une pile à combustible SOFC selon l'une des revendications 7 à 11 selon lequel :
- on alimente les conduits d'amenée (50) en combustible, tel que l'hydrogène ou du méthane, et simultanément les conduits d'amenée (52) en gaz de serrage et d'équilibrage;
- on alimente les conduits d'amenée (51) en air ou oxygène, la pression du combustible et de l'air ou oxygène amenés étant sensiblement égale à celle du gaz de serrage et d'équilibrage ;
- on récupère le surplus de combustible, le gaz de serrage et d'équilibrage ayant circulé dans la chambre de serrage (9), l'eau produite d'une part et le surplus d'air ou d'oxygène d'autre part, dans leur conduit de récupération respectif (53, 54, 55).

14. Procédé de fonctionnement d'un réacteur SOEC ou d'une pile à combustible SOFC selon l'une des revendications 12 ou 13, selon lequel on augmente ou on baisse la température du gaz de serrage et d'équilibrage dans ses conduits d'amenée (52) de sorte à respectivement augmenter ou baisser la température de l'empilement (11), ou lors du fonctionnement, on augmente la pression du gaz de serrage et d'équilibrage dans ses conduits d'amenée (52) en maintenant la pression des gaz réactifs, la différence entre la pression augmentée du gaz de serrage et d'équilibrage et la pression des gaz réactifs étant au plus égale à 500 mbar.

15. Procédé de fonctionnement d'un réacteur SOEC ou d'une pile à combustible SOFC selon l'une des revendications 12 à 14, selon lequel on détecte la présence éventuelle de fuites de combustible dans le circuit de serrage et d'équilibrage contenant de l'air.

## Patentansprüche

1. Elektrochemische Vorrichtung, die einen SOEC-Elektrolyse- oder Ko-Elektrolysereaktor oder eine SOFC-Brennstoffzelle bildet, die dazu bestimmt ist, bei hoher Temperatur zu arbeiten, umfassend:
- einen Stapel (11) elektrochemischer Zellen auf Basis von Festoxiden vom SOEC-/SOFC-Typ;
- zwei Endplatten (33, 34), sogenannte Abschlussplatten, zwischen denen der Stapel angeordnet ist;
- zwei Spannplatten (12, 13) des Stapels, zwischen denen die Endplatten und der Stapel angeordnet sind;
- Spannmittel (15, 16, 17, 18) zwischen den Spannplatten, wobei die Spannmittel geeignet sind, den Stapel zwischen den Abschlussplatten zu spannen und gespannt zu halten, unabhängig von der Temperatur zwischen der Umgebungstemperatur und den hohen Betriebstemperaturen der Vorrichtung;
- eine Spannkammer (9), die zwischen einer der Abschlussplatten (33) und der benachbarten Spannplatte (12) begrenzt ist, wobei die Spannkammer mit einem Spanngaskreislauf im Überdruck im Verhältnis zum Inneren des Stapels verbunden ist.

2. SOEC-Reaktor oder SOFC-Brennstoffzelle nach Anspruch 1, wobei der Spanngaskreislauf von den Reaktionsgaskreisläufen unabhängig ist.

3. SOEC-Reaktor oder SOFC-Brennstoffzelle nach Anspruch 1 oder 2, wobei der Spanngaskreislauf den Stapel (11) nicht durchläuft.

4. SOEC-Reaktor oder SOFC-Brennstoffzelle nach Anspruch 3, wobei der Spanngaskreislauf zwei durchgehende Leitungen (330) umfasst, die in der Dicke der Abschlussplatte (33) gebohrt sind, die die Spannkammer (9) begrenzt.

5. SOEC-Reaktor oder SOFC-Brennstoffzelle nach Anspruch 1 oder 2, wobei der Spanngaskreislauf den Stapel (11) durchläuft.

6. Hochtemperatur-Elektrolyse- oder Ko-Elektrolysereaktor vom SOEC-Typ nach Anspruch 5,
wobei der Stapel ein Stapel (11) aus Einheitszellen ist, jede Einheitszelle umfassend:
• eine elektrochemische Elementarzelle (Cl), die von einer Kathode (2.1), einer Anode (4.1) und einem Elektrolyten (3.1), der zwischen der Kathode und der Anode angeordnet ist, gebildet ist,
• eine erste (5.1) und eine zweite (5.2) Vorrichtung, die jeweils einen elektrischen und fluidischen Interkonnektor bilden, die jeweils von einer Komponente aus elektronisch leitendem und gasdichtem Material gebildet sind; wobei der erste und zweite Interkonnektor beiderseits der Elementarzelle angeordnet sind; wobei der erste Interkonnektor (5.1) von einer Leitung zur Zufuhr des Wasserdampfs (50), die an der Zelle auf der Seite der Kathode (2.1) mündet, und einer Leitung zum Auffangen des erzeugten Wasserstoffs (53), die an der Peripherie der Zelle auf der Seite der Kathode mündet, durchdrungen ist, so dass eine gleichmäßige Verteilung des zugeführten Wasserdampfs respektive des erzeugten Wasserstoffs von der Zufuhrleitung bis zur Auffangleitung hergestellt wird; wobei der zweite Interkonnektor (5.2) von einer Leitung zum Auffangen des erzeugten Sauerstoffs (54) durchdrungen ist, die an der Peripherie der Zelle auf der Seite der Anode (4.1) mündet, so dass eine gleichmäßige Verteilung des erzeugten Sauerstoffs bis zur Auffangleitung hergestellt wird;
• eine erste Dichtung (61), die an der Peripherie der Elementarzelle und in Anlage sowohl gegen den ersten Interkonnektor als auch den zweiten Interkonnektor angeordnet ist;
• eine zweite Dichtung (62), die an der Peripherie der Anode der Elementarzelle und in Anlage sowohl gegen den zweiten Interkonnektor als auch den Elektrolyten angeordnet ist;wobei die erste und zweite Dichtung auf Glas- und/oder Vitrokeramikbasis sind;
• eine Isolierungs- und Dichtungsvorrichtung (8), die an der Peripherie der ersten Dichtung und in Anlage gegen den ersten respektive zweiten Interkonnektor angeordnet ist;
• mindestens eine Leitung zur Zufuhr (52) und mindestens eine Leitung zum Auffangen (55) des Spanngases, die im ersten und zweiten Interkonnektor ausgebildet sind und jeweils an dem Raum münden, der zwischen der ersten Dichtung (61) und der Isolierungs- und Dichtungsvorrichtung (8) begrenzt ist, so dass eine gleichmäßige Verteilung des Spanngases von dessen Zufuhrleitung bis zu dessen Auffangleitung hergestellt wird, wobei das Spanngas so ferner ein Ausgleichgas zum Ausgleich der Drücke beiderseits der ersten Dichtung während des Betriebs des Reaktors unter Druck bildet;
wobei die Leitungen zur Zufuhr (52) und zum Auffangen (55) des Spann- und Ausgleichgaskreislaufs innerhalb der Spannkammer münden.

7. Elektrochemische Vorrichtung nach Anspruch 4, die eine Brennstoffzelle vom SOFC-Typ bildet, wobei der Stapel ein Stapel (11) aus Einheitszellen ist, jede Einheitszelle umfassend:
• eine elektrochemische Festoxid-Elementarzelle (Cl), die von einer Kathode (2.1), einer Anode (4.1) und einem Elektrolyten (3.1), der zwischen der Kathode und der Anode angeordnet ist, gebildet ist,
• eine erste (5.1) und eine zweite (5.2) Vorrichtung, die jeweils einen elektrischen und fluidischen Interkonnektor bilden, die jeweils von einer Komponente aus elektronisch leitendem und gasdichtem Material gebildet sind; wobei der erste und zweite Interkonnektor beiderseits der Elementarzelle angeordnet sind; wobei der erste Interkonnektor von einer Leitung zur Zufuhr von Brennstoff (50), die an der Zelle auf der Seite der Anode (4.1) mündet, und einer Leitung zum Auffangen (53) des erzeugten Wassers, an der Peripherie der Zelle auf der Seite der Anode, durchdrungen ist, so dass eine gleichmäßige Verteilung des zugeführten Brennstoffs respektive des erzeugten Wassers von der Zufuhrleitung bis zur Auffangleitung hergestellt wird; wobei der zweite Interkonnektor von einer Leitung zur Zufuhr von Luft oder Sauerstoff, die an der Zelle auf der Seite der Kathode (2.1) mündet, und einer Leitung zum Auffangen des Überschusses an Luft oder Sauerstoff, die an der Peripherie der Zelle auf der Seite der Kathode mündet, durchdrungen ist, so dass eine gleichmäßige Verteilung der Luft oder des Sauerstoffs von der Zufuhrleitung bis zur Auffangleitung hergestellt wird;
- eine erste Dichtung (61), die an der Peripherie der Elementarzelle und in Anlage sowohl gegen den ersten Interkonnektor als auch den zweiten Interkonnektor angeordnet ist;
- eine zweite Dichtung (62), die an der Peripherie der Kathode der Elementarzelle und in Anlage sowohl gegen den zweiten Interkonnektor als auch den Elektrolyten angeordnet ist; wobei die erste und zweite Dichtung auf Glas- und/oder Vitrokeramikbasis sind;
- eine Isolierungs- und Dichtungsvorrichtung (8), die an der Peripherie der ersten Dichtung und in Anlage gegen den ersten respektive zweiten Interkonnektor angeordnet ist;
- mindestens eine Leitung zur Zufuhr (52) und mindestens eine Leitung zum Auffangen (55) des Spanngases, die im ersten und zweiten Interkonnektor ausgebildet sind und jeweils an dem Raum münden, der zwischen der ersten Dichtung (61) und der Isolierungs- und Dichtungsvorrichtung (8) begrenzt ist, so dass eine gleichmäßige Verteilung des Spanngases von dessen Zufuhrleitung bis zu dessen Auffangleitung hergestellt wird, wobei das Spanngas so ferner ein Ausgleichgas zum Ausgleich der Drücke beiderseits der ersten Dichtung während des Betriebs der Brennstoffzelle unter Druck bildet;
wobei die Zufuhr- (52) und Auffangleitungen (55) des Spann- und Ausgleichgaskreislaufs in der Spannkammer münden.

8. SOEC-Reaktor oder SOFC-Brennstoffzelle nach einem der vorhergehenden Ansprüche, wobei die allgemeine Form des Stapels, der Endplatten und der Spannkammer achsensymmetrisch ist.

9. SOEC-Reaktor oder SOFC-Brennstoffzelle nach einem der vorhergehenden Ansprüche, wobei die Spannkammer über dem Stapel zwischen der oberen Abschlussplatte (33) und der oberen Spannplatte (12) begrenzt ist, die von einer Platte zur elektrischen Isolierung (19) abgetrennt ist.

10. SOEC-Reaktor oder SOFC-Brennstoffzelle nach Anspruch 9, wobei die Spannkammer (9) von der Oberseite der oberen Abschlussplatte (33) als Boden, von einer massiven Platte (90) als Deckel und einem Ring (91) als Seitenwand begrenzt ist, wobei der Boden (33), der Deckel (90) und die Seitenwand (91) der Kammer durch Schweißen miteinander verbunden sind.

11. SOEC-Reaktor oder SOFC-Brennstoffzelle nach einem der vorhergehenden Ansprüche, wobei die Spannmittel zwei Spannbolzen (15, 16, 17, 18) aufweisen, die durch die Spannplatten hindurch angeordnet sind, wobei jeder Spannbolzen vorzugsweise Folgendes umfasst:
- eine Gewinde-Spannstange (15),
- eine erste Spannmutter (16), die einem ersten Spannring (17) zugeordnet ist, die dazu bestimmt sind, durch Verschraubung mit der Gewinde-Spannstange (15) zusammenzuwirken, die durch eine Spannöffnung (14) der oberen Spannplatte (12) eingeführt ist, wobei der erste Spannring (17) zwischen der ersten Spannmutter (16) und der oberen Spannplatte (12) angeordnet ist;
- eine zweite Spannmutter (18), die einem zweiten Spannring (17) zugeordnet ist, die dazu bestimmt sind, durch Verschraubung mit der Gewinde-Spannstange (15) zusammenzuwirken, die durch eine Spannöffnung (14) der unteren Spannplatte (13) eingeführt ist, wobei der zweite Spannring (17) zwischen der zweiten Spannmutter (16) und der unteren Spannplatte (13) angeordnet ist, und vorzugsweise ein elektrisch isolierendes Rohr (17.1), das zwischen der Spannstange (15) und der Spannöffnung der unteren Spannplatte (13) angeordnet ist, wobei der zweite Spannring (17) ebenfalls elektrisch isolierend ist.

12. Betriebsverfahren eines SOEC-Reaktors nach einem der Ansprüche 5 bis 6 und 8 bis 11, wobei:
- die Zufuhrleitungen (50) mit Wasserdampf oder einem Gemisch aus Wasserdampf und einem anderen Gas, das aus Kohlendioxid und Stickstoffdioxid gewählt ist, und gleichzeitig die Zufuhrleitungen (52) mit Spann- und Ausgleichgas gespeist werden, wobei der Druck des zugeführten Wasserdampfs oder Gemischs im Wesentlichen gleich dem des Spann- und Ausgleichgases ist;
- der Wasserstoff oder der Wasserstoff und das Kohlenmonoxid oder Stickstoffmonoxid, die durch Elektrolyse oder Ko-Elektrolyse des Wasserdampfs erzeugt wurden, und gleichzeitig das Ausgleichgas, das in der Spannkammer (9) geströmt ist, in ihrer jeweiligen Auffangleitung (53, 55) aufgefangen wird.

13. Betriebsverfahren einer SOFC-Brennstoffzelle nach einem der Ansprüche 7 bis 11, wobei:
- die Zufuhrleitungen (50) mit Brennstoff, wie beispielsweise Wasserstoff oder Methan und gleichzeitig die Zufuhrleitungen (52) mit Spann- und Ausgleichgas gespeist werden;
- die Zufuhrleitungen (51) mit Luft oder Sauerstoff gespeist werden, wobei der Druck des Brennstoffs und der zugeführten Luft oder des zugeführten Sauerstoffs gleich dem des Spann- und Ausgleichgases ist;
- der Überschuss an Brennstoff, das Spann- und Ausgleichgas, das in der Spannkammer (9) geströmt ist, das erzeugte Wasser einerseits und der Überschuss an Luft oder Sauerstoff andererseits in ihrer jeweiligen Auffangleitung (53, 54, 55) aufgefangen werden.

14. Betriebsverfahren eines SOEC-Reaktors oder einer SOFC-Brennstoffzelle nach einem der Ansprüche 12 oder 13, wobei die Temperatur des Spann- und Ausgleichgases in dessen Zufuhrleitungen (52) so erhöht oder verringert wird, dass die Temperatur des Stapels (11) erhöht respektive verringert wird, oder während des Betriebs der Druck des Spann- und Ausgleichgases in dessen Zufuhrleitungen (52) unter Beibehaltung des Drucks der Reaktionsgase erhöht wird, wobei die Differenz zwischen dem erhöhten Druck des Spann- und Ausgleichgases und dem Druck der Reaktionsgase höchstens gleich 500 mbar ist.

15. Betriebsverfahren eines SOEC-Reaktors oder einer SOFC-Brennstoffzelle nach einem der Ansprüche 12 bis 14, wobei das eventuelle Vorhandensein von Brennstofflecks im Spann- und Ausgleichkreislauf, der Luft enthält, festgestellt wird.

## Claims

1. Electrochemical device, forming an SOEC electrolysis or co-electrolysis reactor or an SOFC fuel cell, designed to operate at high temperature, comprising:
- a stack (11) of electrochemical cells based on SOEC/SOFC solid oxides;
- two end plates (33, 34), called terminal plates, between which the stack is placed;
- two clamping plates (12, 13) of the stack, between which the end plates and the stack are placed;
- clamping means (15, 16, 17, 18) between the clamping plates, the clamping means being adapted to clamp the stack and keep it clamped between the terminal plates, regardless of the temperature between the ambient temperature and the high operating temperatures of the device;
- a clamping chamber (9) delimited between one of the terminal plates (33) and the adjacent clamping plate (12), the clamping chamber being connected to a clamping gas circuit at a higher pressure than the inside of the stack.

2. SOEC reactor or SOFC fuel cell according to Claim 1, the clamping gas circuit being independent of the reactive gas circuits.

3. The SOEC reactor or SOFC fuel cell according to Claim 1 or 2, the clamping gas circuit not passing through the stack (11).

4. SOEC reactor or SOFC fuel cell according to Claim 3, the clamping gas circuit comprising two opening conduits (330), pierced directly through the thickness of the terminal plate (33) delimiting the clamping chamber (9).

5. SOEC reactor or SOFC fuel cell according to Claim 1 or 2, the clamping gas circuit not passing through the stack (11).

6. SOEC high temperature electrolysis or co-electrolysis reactor according to Claim 5,
wherein the stack is a stack (11) of elementary units, each elementary unit comprising:
• an elementary electrochemical cell (C1) formed by a cathode (2.1), an anode (4.1), and an electrolyte (3.1) intercalated between the cathode and the anode,
• a first (5.1) and a second (5.2) device, each forming an electrical and fluid interconnector, each consisting of a component of electronically conductive, gas-tight material, the first and second interconnectors being placed on either side of the elementary cell, the first interconnector (5.1) being pierced by a water vapor (50) supply conduit opening into the cell on the cathode (2.1) side, and by a conduit for recovering the hydrogen produced (53), opening on the periphery of the cell on the cathode side, so as to provide uniform distribution of the water vapor supplied and the hydrogen produced, respectively, from the supply conduit to the recovery conduit; the second interconnector (5.2) being pierced by a conduit for recovering the oxygen produced (54), opening on the periphery of the cell on the anode (4.1) side, so as to provide uniform distribution of the oxygen produced to the recovery conduit;
• a first sealing gasket (61) placed on the periphery of the elementary cell, bearing against the first interconnector and the second interconnector simultaneously;
• a second sealing gasket (62) placed on the periphery of the anode of the elementary cell, bearing against the second interconnector and the electrolyte simultaneously; the first and second sealing gaskets being glass- and/or glass ceramic-based;
• an insulating and sealing device (8) placed on the periphery of the first sealing gasket and bearing against the first and the second interconnector respectively;
• at least one supply conduit (52) and at least one recovery conduit (55) for the clamping gas, formed in the first and second interconnectors, each opening into the space delimited between the first gasket (61) and the insulating and sealing device (8), so as to provide uniform distribution of the clamping gas from its supply conduit to its recovery conduit, the clamping gas thus also forming a balancing gas for balancing the pressures on either side of the first sealing gasket during the pressurized operation of the reactor;
the supply (52) and recovery (55) conduits of the clamping and balancing gas circuit opening into the clamping chamber.

7. Electrochemical device according to Claim 4, forming an SOFC fuel cell, in which the stack is a stack (11) of elementary units, each elementary unit comprising:
• an elementary electrolytic cell (C1) formed by a cathode (2.1), an anode (4.1), and an electrolyte (3.1) intercalated between the cathode and the anode,
• a first (5.1) and a second (5.2) device, each forming an electrical and fluid interconnector, each consisting of a component of electronically conductive, gas-tight material, the first and second interconnectors being placed on either side of the elementary cell, the first interconnector being pierced by a fuel supply conduit (50) opening into the cell on the anode (4.1) side, and by a conduit (53) for recovering the water produced, on the periphery of the cell on the anode side, so as to provide uniform distribution of the fuel supplied and the water produced, respectively, from the supply conduit to the recovery conduit; the second interconnector being pierced by a conduit for supplying air or oxygen, opening into the cell on the cathode (2.1) side, and by a conduit for recovering the surplus air or oxygen, opening on the periphery of the cell on the cathode side so as to provide uniform distribution of the air or oxygen from the supply conduit to the recovery conduit;
- a first sealing gasket (61) placed on the periphery of the elementary cell, bearing against the first interconnector and the second interconnector simultaneously;
- a second sealing gasket (62) placed on the periphery of the cathode of the elementary cell, bearing against the second interconnector and the electrolyte simultaneously; the first and second sealing gaskets being glass- and/or glass ceramic-based;
- an insulating and sealing device (8) placed on the periphery of the first sealing gasket and bearing against the first and the second interconnector respectively;
- at least one supply conduit (52) and at least one recovery conduit (55) for the clamping gas, formed in the first and second interconnectors, each opening into the space delimited between the first gasket (61) and the insulating and sealing device (8), so as to provide uniform distribution of the clamping gas from its supply conduit to its recovery conduit, the clamping gas thus also forming a balancing gas for balancing the pressures on either side of the first sealing gasket during the pressurized operation of the cell;
the supply (52) and recovery (55) conduits of the clamping and balancing gas circuit opening into the clamping chamber.

8. SOEC reactor or SOFC fuel cell according to any of the preceding claims, the general shape of the stack, of the end plates and of the clamping chamber being axisymmetric.

9. SOEC reactor or SOFC fuel cell according to any of the preceding claims, the clamping chamber being delimited above the stack, between the upper terminal plate (33) and the upper clamping plate (12), separated by an electrical insulation plate (19).

10. SOEC reactor or SOFC fuel cell according to Claim 9, the clamping chamber (9) being delimited by the top of the upper terminal plate (33) forming the bottom, by a solid plate (90) forming the cover, and by a ring (91) forming the side wall, the bottom (33), cover (90) and side wall (91) of the chamber being assembled to one another by welding.

11. SOEC reactor or SOFC fuel cell according to any one of the preceding claims, each clamping bolt comprising:
- a threaded clamping shank (15),
- a first clamping nut (16) associated with a first clamping washer (17), both of which are designed to interact by screwing with the threaded clamping shank (15) inserted through a clamping aperture (14) in the upper clamping plate (12), the first clamping washer (17) being placed between the first clamping nut (16) and the upper clamping plate (12);
- a second clamping nut (18) associated with a second clamping washer (17), both of which are designed to interact by screwing with the threaded clamping shank (15) inserted through a clamping aperture (14) in the lower clamping plate (13), the second clamping washer (17) being placed between the second clamping nut (16) and the lower clamping plate (13).

12. Method for the operation of an SOEC reactor according to any of Claims 5 to 6 and 8 to 11, according to which:
- the supply conduits (50) are supplied with water vapor or with a mixture of water vapor and another gas selected from carbon dioxide and nitrogen dioxide, and the supply conduits (52) are simultaneously supplied with clamping and balancing gas, the pressure of the water vapor or of the mixture supplied being substantially equal to that of the clamping and balancing gas;
- the hydrogen, or the hydrogen and carbon monoxide or nitrogen monoxide, produced by electrolysis or co-electrolysis of the water vapor is recovered, and at the same time the balancing gas that has circulated in the clamping chamber (9) is recovered, in their respective recovery conduits (53, 55).

13. Method for the operation of an SOFC fuel cell according to any of Claims 7 to 11, according to which:
- the supply conduits (50) are supplied with fuel such as hydrogen or methane, and the supply conduits (52) are supplied simultaneously with clamping and balancing gas;
- the supply conduits (51) are supplied with air or oxygen, the pressure of the fuel and of the air or oxygen supplied being substantially equal to that of the clamping and balancing gas;
- the surplus fuel, the clamping and balancing gas that has circulated in the clamping chamber (9), and the water produced, on the one hand, and the surplus air or oxygen, on the other hand, are recovered in their respective recovery conduits (53, 54, 55).

14. Method for the operation of an SOEC reactor or SOFC fuel cell according to any of Claims 12 or 13, according to which the temperature of the clamping and balancing gas is raised or lowered in its supply conduits (52) so as to raise or lower, respectively, the temperature of the stack (11) or during operation, the pressure of the clamping and balancing gas in its supply conduits (52) is increased while the pressure of the reactive gases is maintained, the difference between the increased pressure of the clamping and balancing gas and the pressure of the reactive gases being equal to not more than 500 mbar.

15. Method for the operation of an SOEC reactor or SOFC fuel cell according to any of Claims 12 to 14, according to which any presence of fuel leaks in the clamping and balancing circuit containing air is detected.
